# EUROPEAN PATENT APPLICATION

(11) **EP 4 783 050 A1**
(43) Date of publication of application: **29.07.2026**
(21) Application number: 26153358.2
(22) Date of filing: 22.01.2026
(51) Int. Cl.: G06F 21/60, H04L 9/40

(54) **DATA TRANSMISSION DEVICE AND DATA TRANSMISSION METHOD**

(30) Priority: 28.01.2025 JP 2025012356
(71) Applicant: Sharp Kabushiki Kaisha, Sakai City, Osaka 590-8522 (JP)
(72) Inventor: HIGASHIURA, Masaki, Osaka 590-8522 (JP)
(74) Representative: Müller Hoffmann & Partner

(57) **Abstract**

A data transmission device comprising: a transmitter that transmits data; a storage that stores a transmission destination of the data; and one or more controllers that control encryption of the data, wherein the storage stores encryption setting for encrypting the data in association with the transmission destination, and the one or more controllers receive an editing instruction for the encryption setting according to whether or not the encryption setting is applicable to the data, and transmit encrypted data to the transmission destination via the transmitter.

## Description

### BACKGROUND OF THE INVENTION

### Field of the Invention

The present disclosure relates to a data transmission device and the like.

### Description of the Background Art

For example, as an encryption technique, a mail device is known that stores a table in which an address of a transmission destination of a mail and encryption-related information are associated with each other and encrypts encryption target data in accordance with the encryption-related information corresponding to the transmission destination of the mail.

### SUMMARY OF THE INVENTION

An object of the present disclosure is to provide a data transmission device and the like capable of flexibly setting encryption setting when encryption target data is encrypted.

In order to solve the above-described problems, a data transmission device according to the present disclosure is a data transmission device comprising: a transmitter that transmits data; a storage that stores a transmission destination of the data; and one or more controllers that control encryption of the data, wherein the storage stores encryption setting for encrypting the data in association with the transmission destination, and the one or more controllers receive an editing instruction for the encryption setting according to whether or not the encryption setting is applicable to the data, and transmits encrypted data to the transmission destination via the transmitter.

Further, a data transmission method according to the present disclosure is a data transmission method in which a data transmission destination is stored and encryption of the data is controlled, the method comprising: storing encryption setting for encrypting the data in association with the transmission destination, and receiving an editing instruction for the encryption setting according to whether or not the encryption setting is applicable to the data, and transmitting encrypted data to the transmission destination.

According to the present disclosure, it is possible to provide a data transmission device and the like capable of flexibly setting encryption setting when encryption target data is encrypted.

### BRIEF DESCRIPTION OF THE DRAWINGS

FIG. 1 is a view illustrating a connection state between a multifunction peripheral according to a first embodiment and a terminal device.
FIG. 2 is an external perspective view illustrating an external appearance of the multifunction peripheral according to the first embodiment.
FIG. 3 is a diagram illustrating a functional configuration of the multifunction peripheral according to the first embodiment.
FIG. 4A and FIG. 4B are views illustrating address book information and encryption setting according to the first embodiment.
FIG. 5 is a flowchart illustrating a process flow according to the first embodiment.
FIG. 6 is a diagram illustrating an operation example according to the first embodiment.
FIG. 7A and FIG. 7B are diagrams illustrating an operation example according to the first embodiment.
FIG. 8 is a flowchart illustrating a process flow according to the second embodiment.
FIG. 9A and FIG. 9B are diagrams illustrating an operation example according to the second embodiment.
FIG. 10 is a flowchart illustrating a process flow according to the second embodiment.
FIG. 11A, FIG. 11B, and FIG. 11C are diagrams illustrating an operation example according to the second embodiment.
FIG. 12 is a flowchart illustrating a process flow according to a third embodiment.
FIG. 13 is a diagram illustrating an operation example according to the third embodiment.
FIG. 14A and FIG. 14B are diagrams illustrating an operation example according to the third embodiment.
FIG. 15 is a flowchart illustrating a process flow according to the third embodiment.
FIG. 16 is a flowchart illustrating a process flow according to a fourth embodiment.
FIG. 17 is a diagram illustrating an operation example according to the fourth embodiment.
FIG. 18 is a flowchart illustrating a process flow according to the fourth embodiment.
FIG. 19A and FIG. 19B are diagrams illustrating an operation example according to the fourth embodiment.
FIG. 20 is a diagram illustrating an operation example according to the fourth embodiment.
FIG. 21 is a flowchart illustrating a process flow according to the fourth embodiment.
FIG. 22 is a diagram illustrating an operation example according to the fourth embodiment.
FIG. 23 is a flowchart illustrating a process flow according to a fifth embodiment.
FIG. 24 is a diagram illustrating an operation example according to the fifth embodiment.
FIG. 25A, FIG. 25B, and FIG. 25C are diagrams illustrating an operation example according to the fifth embodiment.
FIG. 26 is a flowchart illustrating a process flow according to a sixth embodiment.
FIG. 27 is a diagram illustrating an operation example according to the sixth embodiment.

### DESCRIPTION OF THE PREFERRED EMBODIMENTS

For example, some image processing apparatuses such as a multifunction peripheral have a function (data transmission function) of transmitting data generated from a document read by a scanner device or the like to a specific transmission destination managed with an address book.

In such a data transmission function, as a measure for preventing leakage, falsification, and the like of data, the target data is encrypted and the encrypted data is transmitted.

With respect to the encryption operation of target data, there is known a technique of preparing a table in which an address of a transmission destination of a mail and encryption-related information are associated with each other, thereby eliminating the need for an operation of selecting an encryption method, an encryption key, or the like according to the transmission destination and performing encryption, and reducing a work load for encryption.

However, in the above-described encryption operation, since only setting related to encryption (hereinafter, simply referred to as encryption setting) is applied on the basis of a table prepared in advance, for example, the encryption setting cannot be corrected by a user operation at the time of data transmission, or encryption setting to be applied to a plurality of destinations cannot be selected. Therefore, the encryption setting cannot be flexibly set.

An embodiment in which a data transmission device according to the present disclosure capable of solving the above-described problem is applied to a multifunction peripheral as an image processing apparatus will be described in the following embodiments with reference to the drawings. The following embodiments describe examples of the present disclosure set forth in the claims, and the technical scope of the present disclosure is not limited to the description of the embodiments given below.

### 1. First Embodiment

### 1.1 Overall Configuration

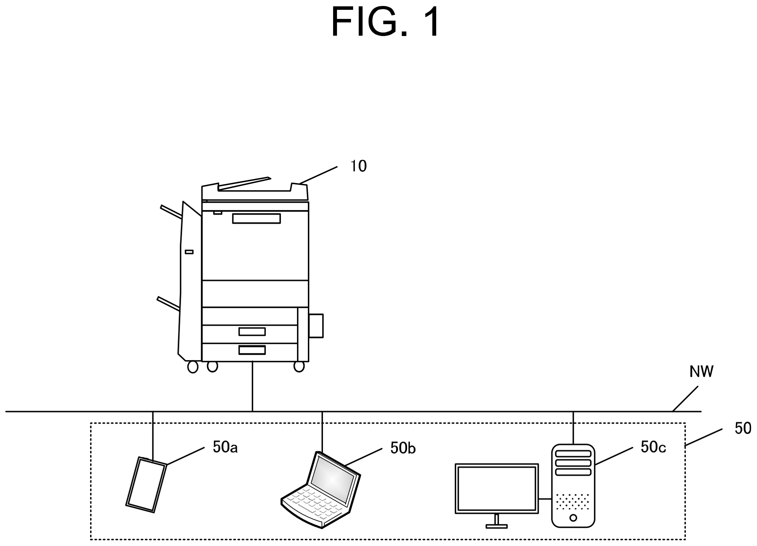

FIG. 1 is a view illustrating an example of a connection state of a multifunction peripheral 10 as an image processing apparatus equipped with a data transmission device according to the first embodiment to terminal devices 50a, 50b, and 50c. When the terminal devices 50a, 50b, and 50c do not need to be distinguished from each other, they are simply referred to as a terminal device 50.

The multifunction peripheral 10 and the terminal device 50 are configured to be able to communicate with each other via a network NW, and the multifunction peripheral 10 can transmit data that has been encrypted (encrypted data) to the terminal device 50. Examples of the network NW include a local area network (LAN), a wide area network (WAN), the Internet, and the like.

### 1.2 Multifunction Peripheral 10

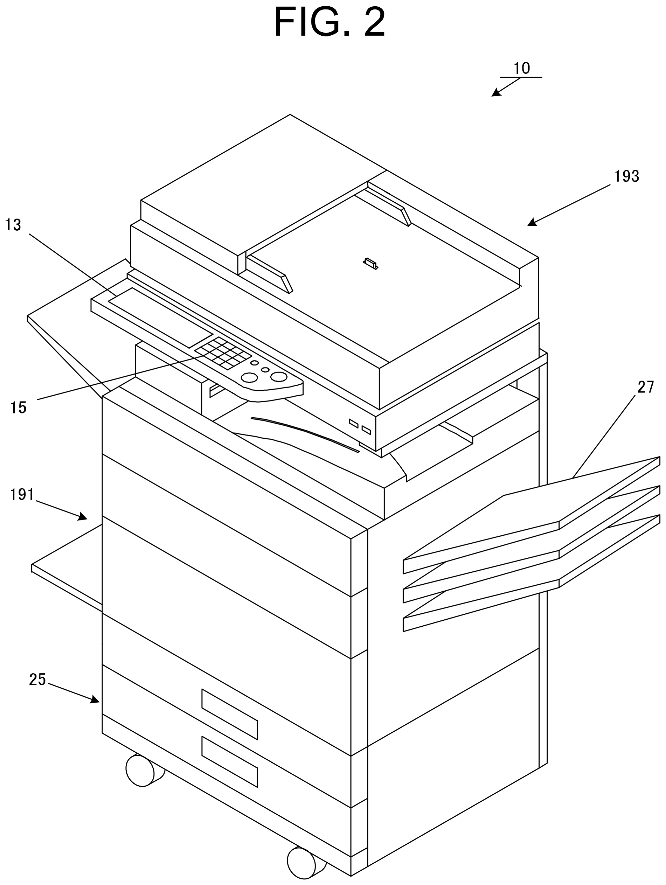

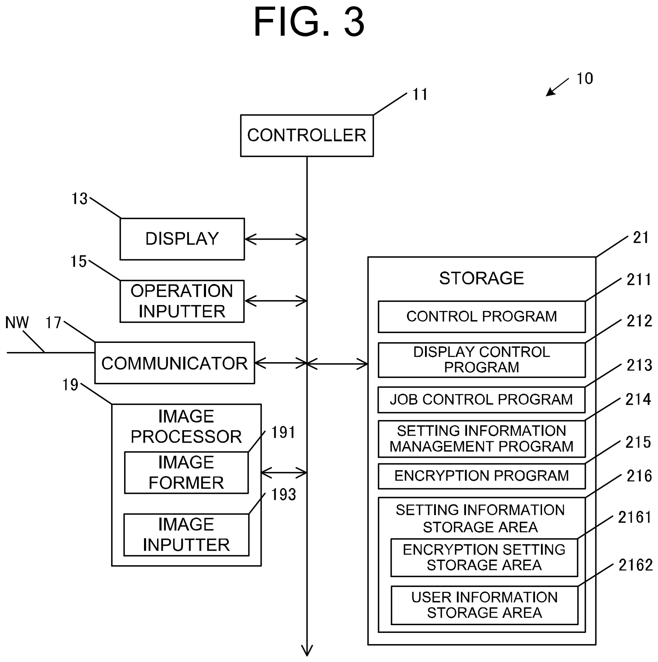

FIG. 2 is an external perspective view illustrating an external appearance of the multifunction peripheral 10. FIG. 3 illustrates a functional configuration of the multifunction peripheral 10.

The multifunction peripheral 10 includes one or more controllers 11, a display 13, an operation inputter 15, a communicator 17, an image processor 19, and a storage 21.

The one or more controllers 11 comprehensively control the multifunction peripheral 10. The one or more controllers 11 may be composed of one or more processing apparatuses (such as a central processing unit (CPU), a System on Chip (SoC), or the like). The one or more controllers 11 read and execute various programs stored in the storage 21 to realize the functions of the programs. The one or more controllers 11 may be composed of one or more control circuits.

The display 13 displays various types of information to a user. The display 13 may be composed of, for example, a liquid crystal display (LCD) or an organic electro-luminescence (EL) display. The display 13 displays an operation screen according to the state of the multifunction peripheral 10 (for example, a home screen (not illustrated), a setting screen related to setting of each job, and an execution screen related to execution of each job), an inquiry screen described below, and the like.

The operation inputter 15 receives input of operation and input of information from a user and the like. The operation inputter 15 can be composed of various input devices such as, for example, an operation key including a hard key or a software key, and a button. Note that the operation inputter 15 can be configured as a touch panel that enables input of information via the display 13. When the operation inputter 15 is configured as a touch panel, the operation inputter 15 can detect the user's touch, tap, swipe operation, and the like, on an object such as an operation key or an operation button displayed via the display 13, and acquire coordinate information and pressure sensing information, etc., on the touch panel. As an input method for the touch panel, for example, a common method such as a resistive film method, an infrared method, an electromagnetic induction method, or an electrostatic capacity method may be adopted.

The communicator 17 includes, for example, either one or both of wired / wireless interfaces for transmitting and receiving data to and from other devices (for example, the terminal device 50) via a network NW such as a LAN, a WAN, the Internet, a telephone line, or a fax line. The communicator 17 may include, for example, an interface related to (short-range) wireless communication technologies such as Bluetooth (registered trademark), near field communication (NFC), Wi-Fi (registered trademark), ZigBee (registered trademark), infrared data association (IrDA), and wireless universal serial bus (USB).

The image processor 19 includes an image former 191 and an image inputter 193. The image former 191 forms an image based on the image data input from the image inputter 193, on a sheet or the like as a recording medium supplied from a sheet feed tray 25. The printed sheet on which the image is formed is discharged to the sheet discharge tray 27. The image former 191 may be composed of, for example, a laser printer using an electrophotographic method. In this case, the image former 191 forms an image using toners supplied from toner cartridges (not shown) corresponding to respective toner colors (for example, cyan, magenta, yellow, and black).

The image inputter 193 can be configured as a scanner device having, for example, in addition to an image sensor such as a charge coupled device (CCD) or a contact image sensor (CIS), an automatic document feeder (ADF), and a flat bed on which a document is placed and read. A configuration of the image inputter 193 is not particularly limited as long as the image inputter 19 is configured such that image data can be generated by reading a reflected light from a document image with the image sensor. The image inputter 193 may be configured as an interface capable of acquiring image data stored in a storage medium such as a USB memory and having a file format of TIFF, BMP, JPEG, and the like, or image data transmitted from another device such as the terminal device 50 or the like. The image inputter 193 may be configured to generate image data for data transmission by applying, for example, shading correction or density correction to the acquired image data.

The storage 21 is one or more storage devices that store various programs or various data necessary for operating the multifunction peripheral 10. The storage 21 may be configured from, for example, a storage device such as a random-access memory (RAM), a solid state drive (SSD), a hard disk drive (HDD), or a read-only memory (ROM).

In the first embodiment, the storage 21 stores a control program 211, a display control program 212, a job control program 213, a setting information management program 214, and an encryption program 215, and secures a setting information storage area 216.

The control program 211 is a program that is read by the one or more controllers 11 when the one or more controllers 11 comprehensively control the multifunction peripheral 10. The one or more controllers 11 that have read the control program 211 control the driving of hardware such as the display 13, the operation inputter 15, the communicator 17, and the image processor 19.

The display control program 212 is a program that is read by the one or more controllers 11 when the one or more controllers 11 control display of an operation screen, inquiry screen described below, and the like displayed on the display 13 or on the operation inputter 15 configured as a touch panel.

The job control program 213 is a program that is read by the one or more controllers 11 when the one or more controllers 11 execute various jobs such as a printing job including a copy job and a print job, a faxing job, or a mail transmitting job. The one or more controllers 11 that have read the job control program 213 set a device mode (operation mode) of the multifunction peripheral 10 to a job mode (for example, copy mode, print mode, scan mode, fax mode, mail transmission mode, and the like) for executing each job and execute the job when the one or more controllers 11 receive execution instruction by a user. The one or more controllers 11 that have read the job control program 213 can function as a transmitter that transmits data when the one or more controllers 11 are in a fax mode, a mail transmission mode, or the like and execute a job related to image transmission.

The setting information management program 214 is a program that is read by the one or more controllers 11 when the one or more controllers 11 manage the setting information for operating the multifunction peripheral 10. Here, the setting information according to the present disclosure may include user information including encryption setting (encryption information), authentication information of a user who uses the multifunction peripheral 10, address book information for managing a transmission destination of encrypted data, and the like, in addition to system setting information for controlling the entire system of the multifunction peripheral 10.

The encryption program 215 is a program that is read by the one or more controllers 11 when data to be encrypted (hereinafter referred to as target data) is encrypted based on the encryption setting. Here, although an algorithm for encryption is not particularly limited, for example, Data Encryption Standard (DES) that is an algorithm of the common key encryption system, Rivest Cipher 4 (RC4), Advanced Encryption Standard (AES), Digital Signature Algorithm (DSA) that is an algorithm of a public key encryption system, EIGamal, RSA, Elliptic Curve Cryptosystem (ECC), and the like can be used. Note that the encryption setting according to the present disclosure refers to a condition provided for encrypting target data based on encryption-related information (encryption information) such as an encryption algorithm to be applied, an encryption level (encryption strength), a password, a secret key associated with authentication information of a transmission user who is a user who transmits data, and a public key acquired from a reception user who is a user who receives data.

The setting information storage area 216 includes storage areas such as an encryption setting storage area 2161 and a user information storage area 2162, and is a storage area for storing setting information that is managed and used by the one or more controllers 11 that have read the setting information management program 214. In particular, the encryption setting storage area 2161 is a storage area for storing, as encryption setting, encryption information such as an algorithm applied to encryption of target data, an encryption level, a password, a secret key associated with authentication information of a transmission user to be described later, and a public key acquired from a reception user. The user information storage area 2162 is a storage area for storing user information such as authentication information of a user and address book information.

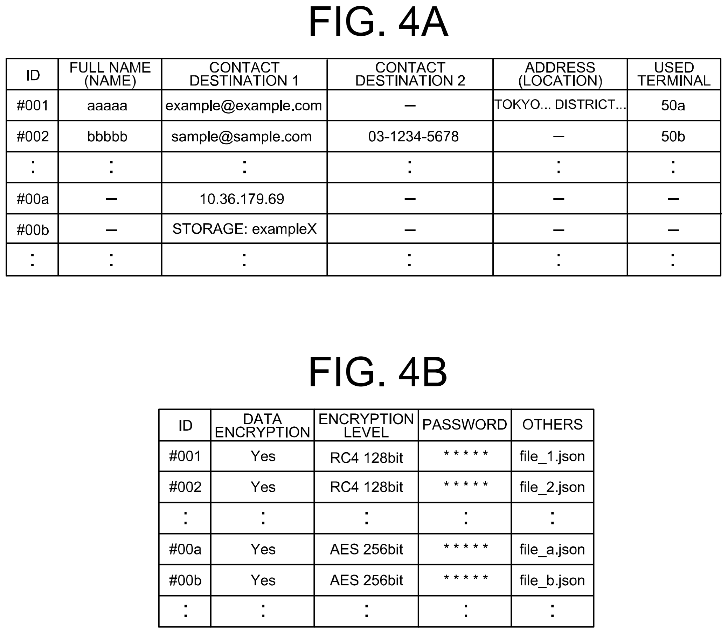

Here, the address book information and the encryption setting (encryption information) according to the first embodiment will be described with reference to FIG. 4A and FIG. 4B. FIG. 4A is a table for explaining an example of the address book information stored in the user information storage area 2162. FIG. 4B is a table for explaining an example of the encryption setting stored in the encryption setting storage area 2161. Although an example in which the address book information and the encryption setting are managed in a table format will be described with reference to FIG. 4A and FIG. 4B, a method of managing these pieces of information is not limited to the table format, and may be, for example, a database format.

The address book information table illustrated in FIG. 4A includes, as items to be managed, an ID, a full name (name), a contact destination 1, a contact destination 2, an address (location), and a used terminal. The ID is an identifier for uniquely identifying a person, a company, an organization, or the like (which may be simply referred to as a person or the like) managed by the address book information. The full name (name) represents a full name, a name, or the like of the person or the like identified by the ID. The contact destination 1 and the contact destination 2 are contact destinations of a person or the like identified by the ID, and are also transmission destinations of encrypted data. The address (location) represents an address (location) of the person or the like identified by the ID, and the used terminal represents a terminal device (for example, the terminal device 50a) used by the person or the like identified by the ID. The items of the address (location) and the used terminal are not essential management items, and for example, the items of the address (location) and the used terminal may be managed when an input of information regarding the address (location) or the used terminal is received via the address book management screen.

For example, the name of a person or the like identified by the ID "#001" is "aaaaa", and the mail address indicated by the contact destination 1 is "example@example.com". The contact destination is not limited to the e-mail address. For example, the contact destination may be a fax number (e.g., ID "#002":03-1234-5678), an IP address (e.g., ID "#00a":10.36.179.69), a data storage such as a cloud storage (e.g., ID "#00b": storage: exampleX), or any other address information capable of identifying the encrypted data transmission destination.

The encryption setting table illustrated in FIG. 4B includes an ID, data encryption, an encryption level, a password, and others as management items. The ID is a management item having the same content as the ID related to the address book information table illustrated in FIG. 4A. That is, the transmission destination (address book information) of the encrypted data and the encryption setting are associated with each other via the ID.

The data encryption is a flag indicating whether or not data to be transmitted is the target data to be encrypted. In FIG. 4B, a flag "YES" is set when data is the target data to be encrypted, and a flag "NO" is set when data is not the target to be encrypted. The setting of data encryption can be performed via a management screen to be described later.

The encryption level represents an encryption level according to an encryption algorithm to be applied, and the password represents a password for encryption.

The others represent a file name of a generation condition file in which a generation condition of encrypted data (for example, a compression format, a compression rate, or the like of data when generation of encrypted data involves data compression or the like) is recorded. Although FIG. 4B illustrates an example in which the file format of the file is a JSON format, the file format may be, for example, a text file format, an EXCEL file format, a binary file format, or the like, and the file format is not limited as long as the one or more controllers 11 can generate encrypted data by reading the file.

For example, the encryption setting identified by the ID "#001" represents the encryption setting associated with the transmission destination "example@example.com" identified by the ID "#001" illustrated in FIG. 4A, and represents that the data encryption is "YES", the encryption level is "RC4 128bit", the password is "*****", and the others are "file_1.json".

The one or more controllers 11 that have read the encryption program 215 can encrypt the target data based on the encryption setting associated with the specific transmission destination. In the present disclosure, the address book information table and the encryption setting table are separately provided, and these tables are associated with each other by the ID. However, the present disclosure is not limited thereto, and the address information may include the encryption setting, or the encryption setting may include the address information. Hereinafter, the address book information may be simply referred to as an address book.

### 1.3 Terminal Device 50

The terminal devices 50a, 50b, and 50c are examples of terminal devices used by reception users who receive encrypted data transmitted from the multifunction peripheral 10. The terminal devices 50a, 50b, and 50c have a function of communicating with the multifunction peripheral 10 and decrypting the encrypted data received from the multifunction peripheral 10, and can be configured as information processing apparatuses such as smartphones, laptop computers, desktop computers, tablets, cell phones, or the like. The configuration of the terminal devices 50a, 50b, and 50c is not particularly limited as long as the terminal devices 50a, 50b, and 50c can communicate with the multifunction peripheral 10 and can decrypt encrypted data transmitted from the multifunction peripheral 10. Since an information processing apparatus having a general configuration distributed in the market can be used as the terminal devices 50a, 50b, and 50c, a description of a detailed functional configuration of the terminal devices 50a, 50b, and 50c will be omitted.

### 1.4 Process Flow

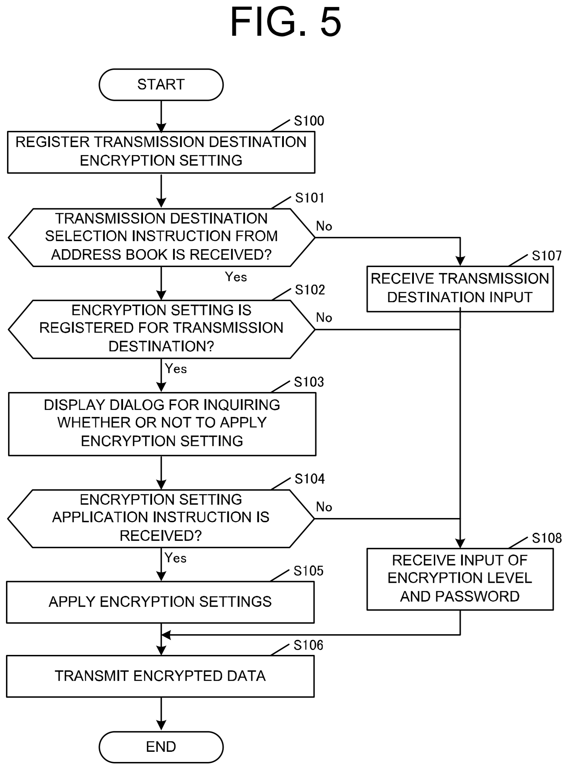

Next, a process flow according to the first embodiment will be described. FIG. 5 is a flowchart for explaining a process from encryption setting for a transmission destination to transmission of encrypted data in the first embodiment. The process to be explained in FIG. 5 is a process to be executed when the one or more controllers 11 of the multifunction peripheral 10 read the setting information management program 214, the encryption program 215, and the like.

The transmission user performs encryption setting for the transmission destination registered in the address book illustrated in FIG. 4A via a management screen to be described later. The one or more controllers 11 perform a registration process in which the transmission destination and the encryption setting are associated with each other based on the encryption setting performed by the transmission user (step S100).

The one or more controllers 11 determine whether or not a selection instruction for a transmission destination to which encrypted data is transmitted by the transmission user from the address book has been received (step S101). Note that the process of step S100 and the process of step S101 may be performed simultaneously. That is, the transmission user can also perform encryption setting for the transmission destination selected as the transmission destination of the encrypted data. In this case, the process of step S102 may be omitted.

When it is determined that the selection instruction for the transmission destination has been received, the one or more controllers 11 determine whether or not the encryption setting is registered for the transmission destination selected by the transmission user (step S101; Yes → step S102). In this case, the one or more controllers 11 can determine whether or not the encryption setting corresponding to the ID of the transmission destination selected by the transmission user is registered by referring to the encryption setting table.

When it is determined that the encryption setting is registered for the transmission destination, the one or more controllers 11 display an inquiry screen for inquiring whether or not to apply the encryption setting to the target data (step S102; Yes → step S103).

Then, the one or more controllers 11 determine whether or not an instruction to apply the encryption setting has been received from the transmission user via the displayed inquiry screen (step S104). When it is determined that the instruction to apply the encryption setting has been received from the transmission user, the one or more controllers 11 apply the encryption setting to the target data (step S104; Yes → step S105).

The one or more controllers 11 transmit the encrypted data generated by applying the encryption setting to the transmission destination received in step S101, and end the process (step S106).

In step S101, when it is determined that the selection instruction for the transmission destination has not been received, the one or more controllers 11 receive the input of the transmission destination, and the process proceeds to step S108 (step S101; No → step S107 → step S108).

Further, when it is determined in step S102 that the encryption setting is not registered for the transmission destination selected by the transmission user (step S102; No), and when it is determined in step S104 that the instruction to apply the encryption setting has not been received from the transmission user (step S104; No), the one or more controllers 11 receive the input of the encryption level and the password for the transmission destination as the encryption setting, and the process proceeds to step S106 (step S108 → step S106).

### 1.4. Operation Example

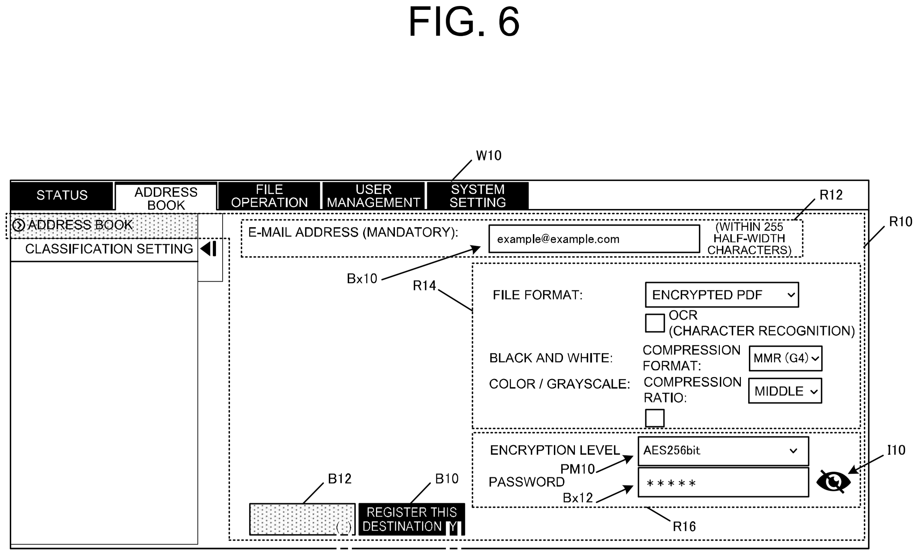

Next, operation examples according to the first embodiment are described. FIG. 6 is a diagram illustrating an example of a display configuration of a management screen W10 displayed by the multifunction peripheral 10. The management screen W10 includes selection tabs such as a status tab, an address book tab, a file operation tab, a user management tab, and a system setting tab. FIG. 6 is an example in which the address book tab is selected by the transmission user from among these selection tabs, and an address book management area R10 for receiving an instruction to register or edit the address book managed by the multifunction peripheral 10 is displayed.

The address book management area R10 includes an address input area R12, a data generation condition input area R14, an encryption setting area R16, a "REGISTER THIS DESTINATION (Y)" button B10, and a "DELETE THIS DESTINATION (X)" button B12.

The address input area R12 is an area for receiving an input of an address to be registered or edited. Although FIG. 6 shows an example in which an E-mail address input box Bx10 is provided as an address input format, an address that can be input is not limited to an E-mail address, and for example, a FAX number, an IP address, an input to a data storage such as a cloud, or the like can be received. In this case, an input box corresponding to the input format of each address may be displayed instead of the E-mail address input box Bx10.

The data generation condition input area R14 is an area for receiving an input of a generation condition of transmission data such as encrypted data. FIG. 6 is an example in which pull-down menus and check boxes for receiving input of a file format, a compression format, a compression rate, and the like as transmission data generation conditions are provided. The encrypted data generation conditions received in the data generation condition input area R14 are stored as a generation condition file. For example, when "ENCRYPTED PDF" is selected as the file format in the data generation condition input area R14, the one or more controllers 11 set the data encryption flag illustrated in FIG. 4B to "YES", and set the data that is to be transmitted to the transmission destination input in the E-mail address input box Bx10 to the encrypted data.

The encryption setting area R16 includes an encryption level selection pull-down menu PM10, a password input box Bx12, and an input password display icon I10. The encryption level selection pull-down menu PM10 receives a selection instruction for an encryption level according to an encryption algorithm to be applied to target data. The password input box Bx12 is an input box for receiving an input of a password for encrypting the target data. The input password display icon I10 is an icon for receiving whether or not to display a password to be input to the password input box Bx12. FIG. 6 is an example in which the display of the password to be input to the password input box Bx12 is set to "NO". When the password to be input is displayed in the password input box Bx12, the transmission user can display the password to be input in the password input box Bx12 by selecting the input password display icon I10. In this case, it is preferable that the input password display icon I10 is displayed in a pattern different from the pattern when the display of the password is set to "NO", and the transmission user is visually notified of whether or not the input password can be displayed in the password input box Bx12. The encryption setting area R16 may be displayed (activated) when a file format including "encryption" is selected in the data generation condition input area R14.

The "REGISTER THIS DESTINATION (Y)" button B10 is a button for receiving an instruction to register an address input via the address book management area R10. When an instruction to select the "REGISTER THIS DESTINATION (Y)" button B10 is received, the one or more controllers 11 register the address in the address book (information), and register the encryption setting in association with the address. At this time, the generation condition of the transmission data input via the data generation condition input area R14 is also registered.

The "DELETE THIS DESTINATION (X)" button B12 is a button for receiving an instruction to delete an address input via the address book management area R10. When an instruction to select the "DELETE THIS DESTINATION (X)" button B12 is received, the one or more controllers 11 delete the address from the address book, and delete the encryption setting associated with the address. At this time, the registered generation condition of the transmission data is also deleted.

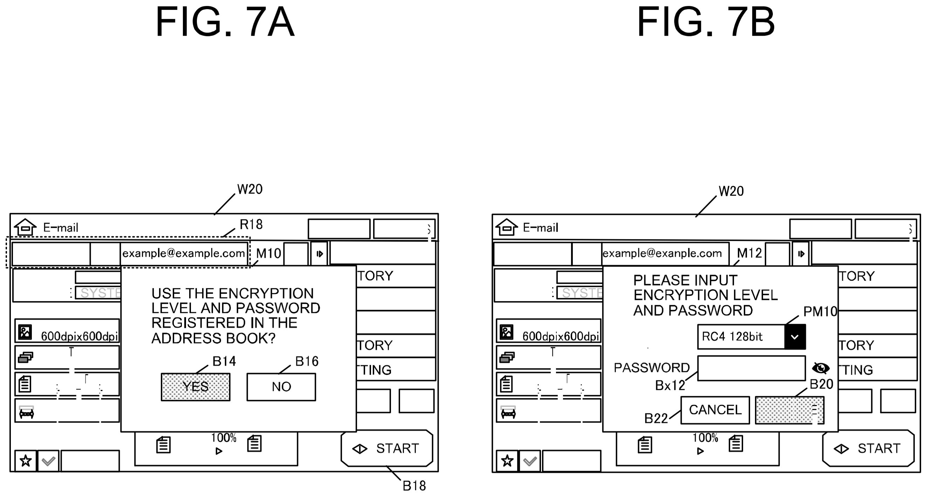

Next, FIG. 7A and FIG. 7B are diagrams for explaining an operation example from reception of an instruction to select a transmission destination from an address book to transmission of encrypted data. FIG. 7A and FIG. 7B are diagrams illustrating an example of a display configuration of a job execution screen W20 related to a Scan to E-mail job (image transmission job).

Here, FIG. 7A is an example of a display configuration of an inquiry screen M10 for inquiring whether or not to apply the registered encryption setting to the transmission destination. This display configuration is displayed by the one or more controllers 11 when the user selects the encrypted data transmission destination (example@example.com) from the address book via the transmission destination selection area R18 of the job execution screen W20 (corresponding to the process of step S103 of FIG. 5).

The inquiry screen M10 includes "USE THE ENCRYPTION LEVEL AND PASSWORD REGISTERED IN THE ADDRESS BOOK?" for inquiring whether or not to apply the registered encryption setting to the transmission destination, a "YES" button B14 for receiving a selection instruction to agree with the inquiry content, and a "NO" button B16 for receiving a selection instruction not to agree with the inquiry content.

The transmission user can input an instruction to determine whether or not to apply the encryption setting registered in association with the transmission destination by confirming the inquiry content and selecting either the "YES" button B14 or the "NO" button B16. When the "YES" button B14 is selected by the user and an instruction to select the "START" button B18 of the job execution screen W20 is received, the one or more controllers 11 apply the encryption setting registered in association with the transmission destination to generate encrypted data. Then, the one or more controllers 11 transmit the generated encrypted data (corresponding to the process of step S105 and step S106 in FIG. 5). On the other hand, when an instruction to select the "NO" button B16 is received, the one or more controllers 11 display an editing screen M12 illustrated in FIG. 7B, and receive input of an encryption level and a password by the user.

FIG. 7B is an example of a display configuration of the editing screen M12 displayed by the one or more controllers 11 when an instruction to select the "NO" button B16 of the inquiry screen M10 in FIG. 7A is received.

The editing screen M12 includes a content "PLEASE INPUT ENCRYPTION LEVEL AND PASSWORD" for prompting the user to input an encryption level and a password, an encryption level selection pull-down menu PM10, a password input box Bx12, an "EXECUTE" button B20, and a "CANCEL" button B22.

Since the encryption level selection pull-down menu PM10 and the password input box Bx12 have the same configuration as that of the encryption setting area R16 in FIG. 6, a description thereof will be omitted.

The "EXECUTE" button B20 is a button for receiving an instruction to execute encryption of target data based on the encryption setting input to the encryption level selection pull-down menu PM10 and the password input box Bx12. When the "EXECUTE" button B20 is selected and an instruction to select the "START" button B18 of the job execution screen W20 is received, the one or more controllers 11 transmit the encrypted data generated based on the input encryption setting. On the other hand, the "CANCEL" button B22 is a button for receiving an instruction to cancel the input contents of the encryption level selection pull-down menu PM10 and the password input box Bx12. When an instruction to select the "CANCEL" button B22, the one or more controllers 11 cancel the input contents related to the encryption setting and end the display of the editing screen M12.

As described above, according to the first embodiment, since the encryption setting is registered in association with the transmission destination of the encrypted data, it is possible to save time and effort for setting the encryption level, the password, and the like at the time of transmitting the encrypted data. Further, according to the first embodiment, it is possible to flexibly cope with a case where encryption setting different from the encryption setting registered in the address book is desired to be applied.

### 2. Second Embodiment

The second embodiment is a form in which, when the encryption setting does not match the encryption condition for the target data, it is determined that the encryption setting cannot be applied, and the user is prompted to input an appropriate encryption setting.

The maximum character length of a password used to encrypt target data varies depending on the encryption level to be applied. For example, when the encryption level registered in association with the transmission destination is changed (lowered), the password registered as the encryption setting is not within the password maximum character length, and the target data may not be encrypted.

In the second embodiment, as an aspect of a case where the encryption setting and the encryption condition for the target data do not match, two aspects including
(Aspect 2-1) in which the setting is changed to lower the encryption level when the target data is encrypted (transmitted), and
(Aspect 2-2) in which the encryption level related to the encryption setting of the selected transmission destination is lowered when the encryption level is fixedly set in advance in the system setting will be described.

The functional configuration of the multifunction peripheral according to the second embodiment can be the same as the functional configuration of the multifunction peripheral 10 according to the first embodiment. Thus, the same reference numerals are used, and the description thereof is omitted here.

### 2.1 Aspect 2-1

### 2.1.1 Process Flow

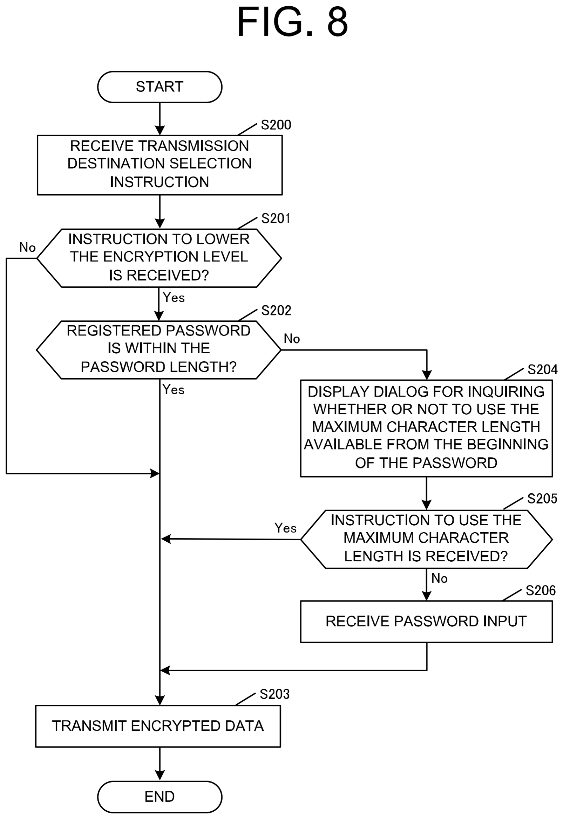

FIG. 8 is a flowchart illustrating a process flow in the Aspect 2-1. The process to be explained in FIG. 8 is a process to be executed when the one or more controllers 11 of the multifunction peripheral 10 read the setting information management program 214, the encryption program 215, and the like.

The one or more controllers 11 receive an instruction to select a transmission destination to which encrypted data is transmitted by the transmission user from the address book (step S200).

Next, the one or more controllers 11 determine whether or not an instruction to lower the encryption level has been received from the transmission user (step S201). When it is determined that the instruction to lower the encryption level has been received from the transmission user, the one or more controllers 11 determine whether or not the length (password length) of the password (registered password) registered in association with the transmission destination is within the maximum character length of the password corresponding to the changed encryption level (step S201; Yes → step S202). When it is determined that the length of the registered password is within the password maximum character length corresponding to the changed encryption level, the one or more controllers 11 encrypt the target data using the encryption level and the password registered as the encryption setting, transmit the encrypted data to the transmission destination received in step S200, and end the process (step S202; Yes → step S203).

On the other hand, when it is determined that the instruction to lower the encryption level by the transmission user is not received, the one or more controllers 11 encrypt the target data using the encryption level and the password registered as the encryption setting, transmit the encrypted data to the transmission destination received in step S200, and end the process (step S201; No → step S203).

When it is determined in step S202 that the length of the registered password is not within the password maximum character length corresponding to the changed encryption level, the one or more controllers 11 determine that the registered encryption setting cannot be applied, and display an inquiry screen for inquiring of the transmission user whether or not to use the maximum character length available from the beginning of the password as the password (step S202; No → step S204).

Next, the one or more controllers 11 determine whether or not an instruction to use the maximum character length available from the beginning of the password as the password has been received from the transmission user (step S205). When it is determined that the instruction to use the maximum character length available from the beginning of the password as the password is received from the transmission user, the one or more controllers 11 encrypt the target data using the password, transmit the encrypted data to the transmission destination received in step S200, and end the process (step S205; Yes → step S203).

On the other hand, when an instruction not to use the maximum character length available from the beginning of the password as the password is received from the transmission user, the one or more controllers 11 receive the input of a password from the transmission user (step S205; No → step S206). Then, the one or more controllers 11 encrypt the target data using the received password, transmit the encrypted data to the transmission destination received in step S200, and end the process (step S203).

### 2.1.2 Operation Example

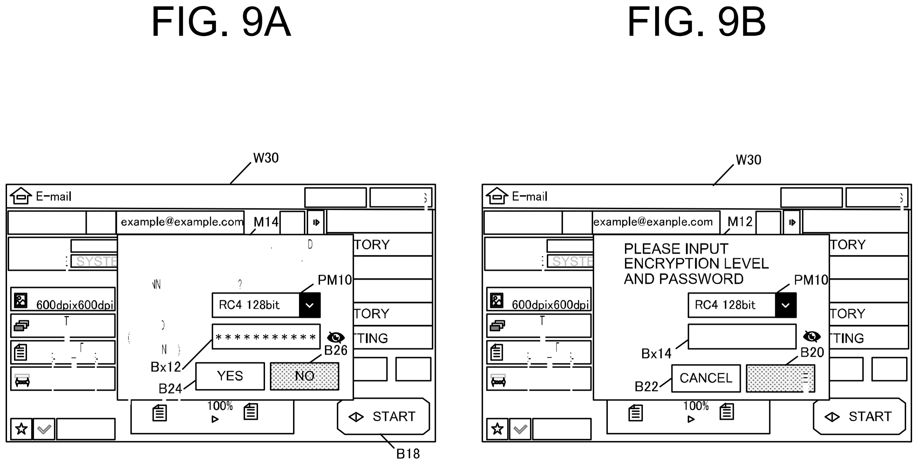

Next, an operation example according to the Aspect 2-1 will be described. FIG. 9A and FIG. 9B are diagrams illustrating an example of a display configuration of a job execution screen W30 related to a Scan to E-mail job. The description of the same configuration as that of the first embodiment will be omitted.

FIG. 9A is a diagram illustrating an example of a display configuration of an inquiry screen (editing screen) M14 for inquiring of the transmission user whether or not to use the maximum character length available from the beginning of the password as the password when an instruction to lower the encryption level by the transmission user is received and it is determined that the length of the registered password in association with the transmission destination is not within the maximum character length of the password corresponding to the changed encryption level.

The inquiry screen (editing screen) M14 includes a content "ENCRYPTION LEVEL HAS BEEN LOWERED. PASSWORD REGISTERED IN ADDRESS BOOK CANNOT BE USED. USE THE MAXIMUM CHARACTER LENGTH FROM THE BEGINNING OF THE PASSWORD? " for inquiring of the transmission user whether or not to use the maximum character length available from the beginning of the password as the password, an encryption level selection pull-down menu PM10, a password input box Bx12, a "YES" button B24 for receiving a selection instruction to agree with the inquiry content, and a "NO" button B26 for receiving a selection instruction not to agree with the inquiry content.

The transmission user can confirm the inquiry content and selects either the "YES" button B24 or the "NO" button B26, thereby inputting an instruction to determine whether or not to use the maximum character length available from the beginning of the password registered in the address book as the password. When the "YES" button B24 is selected by the transmission user and an instruction to select the "START" button B18 of the job execution screen W30 is received, the one or more controllers 11 generate an encrypted data with the maximum character length available from the beginning of the password registered in the address book as the password. Then, the one or more controllers 11 transmit the generated encrypted data to the transmission destination designated by the transmission user. (corresponding to the process of step S205; Yes → step S203 in FIG. 8). On the other hand, when an instruction to select the "NO" button B26 is received, the one or more controllers 11 display the editing screen M12 illustrated in FIG. 9B and receive an input of a password by the transmission user.

FIG. 9B is an example of a display configuration of the editing screen M12 displayed by the one or more controllers 11 when an instruction to select the "NO" button B26 of the inquiry screen (editing screen) M14 in FIG. 9A is received. The editing screen M12 illustrated in FIG. 9B may have the same configuration as that of the inquiry screen M12 illustrated in FIG. 7B, and thus the description thereof is omitted here.

### 2.2 Aspect 2-2

### 2.2.1 Process Flow

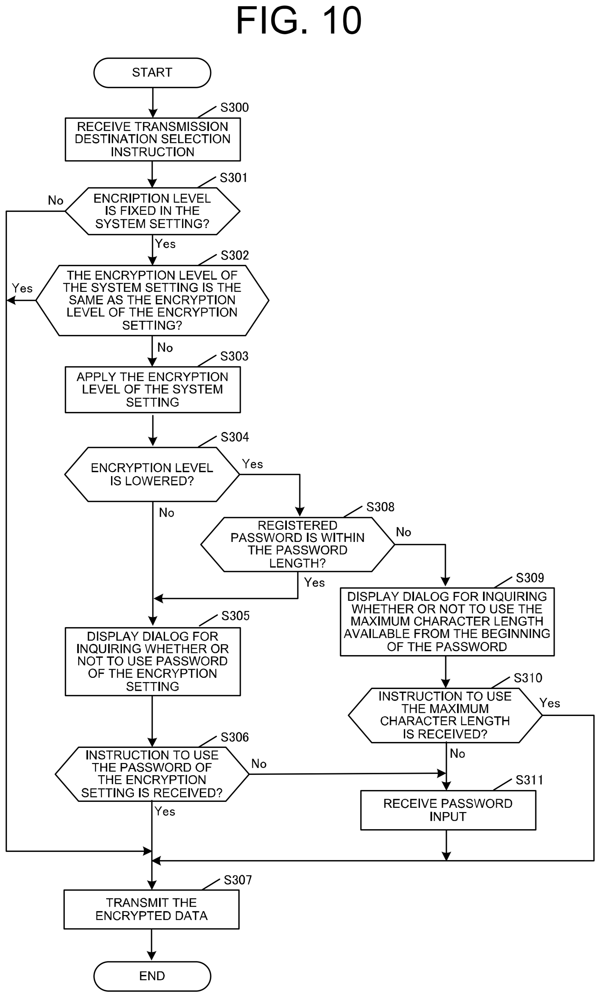

FIG. 10 is a flowchart illustrating a process flow in the Aspect 2-2. The process to be explained in FIG. 10 is a process to be executed when the one or more controllers 11 of the multifunction peripheral 10 read the setting information management program 214, the encryption program 215, and the like.

The one or more controllers 11 receive a selection instruction for a transmission destination to which encrypted data is transmitted by the transmission user from the address book (step S300).

Next, the one or more controllers 11 determine whether or not the encryption level is fixed in the system setting of the multifunction peripheral 10 (step S301). When it is determined that the encryption level is fixed in the system setting, the one or more controllers 11 determine whether or not the encryption level fixed in the system setting is the same as the encryption level related to the encryption setting of the selected transmission destination (step S301; Yes → step S302).

When it is determined that the encryption level fixed in the system setting is the same as the encryption level related to the encryption setting of the selected transmission destination, the one or more controllers 11 encrypt the target data with the encryption level and the password related to the encryption setting of the selected transmission destination, transmit the encrypted data to the transmission destination received in step S300, and end the process (step S302; Yes → step S307).

On the other hand, when it is determined that the encryption level fixed in the system setting is not the same as the encryption level related to the encryption setting of the selected transmission destination, the one or more controllers 11 determine that the encryption level related to the encryption setting cannot be applied and determine that the encryption level related to the system setting is applied (step S302; No → step S303).

Next, the one or more controllers 11 determine whether or not the encryption level is lowered by the application of the encryption level related to the system setting (step S304). When it is determined that the encryption level is not lowered by the application of the encryption level related to the system setting, the one or more controllers 11 display an inquiry screen for inquiring whether or not to use the password related to the encryption setting (step S304; No → step S305).

Then, the one or more controllers 11 determine whether or not an instruction to use the password related to the encryption setting is received from the transmission user (step S306). When an instruction to use the password related to the encryption setting is received from the transmission user, the one or more controllers 11 encrypt the target data using the encryption level related to the system setting and the password related to the encryption setting, transmit the encrypted data to the transmission destination received in step S300, and end the process (step S306; Yes → step S307). When it is determined that the instruction to use the password related to the encryption setting is not received from the transmission user, the one or more controllers 11 cause the process to proceed to step S311 (step S306; No → step S311).

When it is determined in step S304 that the encryption level is lowered by the application of the encryption level related to the system setting, the one or more controllers 11 determine whether or not the length (password length) of the password (registered password) registered in association with the transmission destination is within the maximum character length of the password corresponding to the encryption level related to the system setting (step S304; Yes → step S308). When it is determined that the length of the registered password is within the password maximum character length corresponding to the encryption level related to the system setting, the one or more controllers 11 cause the process to proceed to step S305 (step S308; Yes → step S305).

On the other hand, when it is determined that the length of the registered password is not within the password maximum character length corresponding to the encryption level related to the system setting, the one or more controllers 11 determine that the registered encryption setting cannot be applied, and display an inquiry screen for inquiring of the transmission user whether or not to use the maximum character length available from the beginning of the password as the password (step S308; No → step S309).

Next, the one or more controllers 11 determine whether or not an instruction to use the maximum character length available from the beginning of the password as the password has been received from the transmission user (step S310). When it is determined that the instruction to use the maximum character length available from the beginning of the password as the password is received from the transmission user, the one or more controllers 11 encrypt the target data using the password, transmit the encrypted data to the transmission destination received in step S300, and end the process (step S310; Yes → step S307).

On the other hand, when an instruction not to use the maximum character length available from the beginning of the password as the password is received from the transmission user, the one or more controllers 11 receive the input of a password from the transmission user (step S310; No → step S311). Then, the one or more controllers 11 encrypt the target data using the received password, transmit the encrypted data to the transmission destination received in step S300, and end the process (step S307).

When it is determined that the encryption level is not fixed in the system setting (step S301; No), the one or more controllers 11 encrypt the target data with the encryption level and the password registered as the encryption setting, transmit the encrypted data to the transmission destination received in step S300, and end the process (step S301; No → step S307).

### 2.2.2 Operation Example

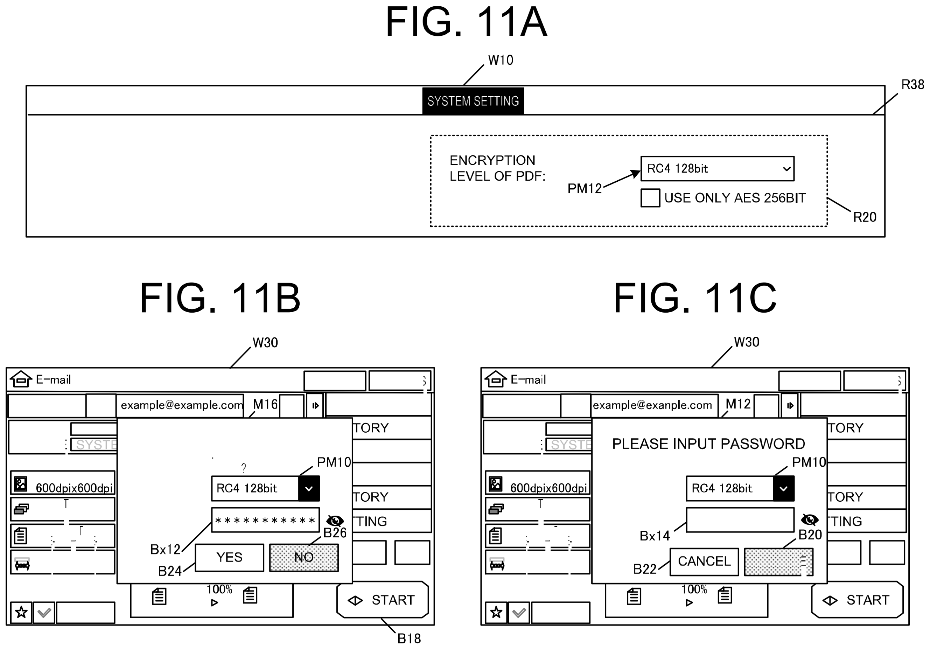

Next, an operation example according to the Aspect 2-2 will be described. FIG. 11A is a diagram schematically showing a system setting area R38 of the management screen W10 displayed by the multifunction peripheral 10, and FIG. 11B and FIG. 11C are diagrams illustrating an example of a display configuration of the job execution screen W30 related to the Scan to E-mail job. The description of the same configuration as that of the first embodiment and the Aspect 2-1 will be omitted.

The system setting area R38 shown in FIG. 11A can be displayed by receiving an instruction to select the system setting tab of the management screen W10 illustrated in FIG. 6. The system setting area R38 has an encryption level fixing area R20 for receiving an instruction to set the encryption level. The encryption level fixing area R20 includes an encryption level fixing selection pull-down menu PM12, and the management user having the management authority of the multifunction peripheral 10 can uniformly fix the encryption level of the encrypted data transmitted from the multifunction peripheral 10 by selecting a desired encryption level via the encryption level fixing selection pull-down menu PM12. The encryption level of the encrypted data transmitted from the multifunction peripheral 10 can be uniformly fixed by checking "USE ONLY AES 256BIT" provided in the encryption level fixing area R20.

FIG. 11B is a diagram illustrating an example of a display configuration of an inquiry screen (editing screen) M16 for inquiring of the transmission user whether or not to use the password related to the encryption setting when it is determined that the encryption level fixed in the system setting is not the same as the encryption level related to the encryption setting of the selected transmission destination.

The inquiry screen (editing screen) M16 includes a content "ENCRYPTION LEVEL HAS BEEN CHANGED TO THE ENCRYPTION LEVEL OF THE SYSTEM SETTING. USE THE PASSWORD OF THE ADDRESS BOOK? " for inquiring of the transmission user whether or not to use the password related to the encryption setting registered in the address book, an encryption level selection pull-down menu PM10, a password input box Bx12, a "YES" button B24 for receiving a selection instruction to agree with the inquiry content, and a "NO" button B26 for receiving a selection instruction not to agree with the inquiry content.

The transmission user can input an instruction to determine whether or not to use the password related to the encryption setting by confirming the inquiry content and selecting either the "YES" button B24 or the "NO" button B26. When the "YES" button B24 is selected by the transmission user and an instruction to select the "START" button B18 of the job execution screen W30 is received, the one or more controllers 11 generate an encrypted data using the password related to the encryption setting. Then, the one or more controllers 11 transmit the generated encrypted data to the selected transmission destination (corresponding to the process of step S305; Yes → step S306 in FIG. 10). On the other hand, when an instruction to select the "NO" button B26 is received, the one or more controllers 11 display the editing screen M12 illustrated in FIG. 11B and receive an input of a password by the transmission user.

FIG. 11B is an example of a display configuration of the editing screen M12 displayed by the one or more controllers 11 when an instruction to select the "NO" button B26 of the inquiry screen (editing screen) M16 in FIG. 11A is received. The editing screen M12 illustrated in FIG. 11B may have the same configuration as that of the editing screen M12 illustrated in FIG. 7B, and thus the description thereof is omitted here.

As described above, according to the second embodiment, it is possible to flexibly cope with a case where the uniform application of the encryption setting different from the encryption setting registered in the address book is set as the system. Further, by having the transmission user use the encryption level designated by the management user having the management authority of the multifunction peripheral, the encrypted data having the encryption level satisfying the predetermined level can be transmitted.

### 3. Third Embodiment

The third embodiment is a form in which encrypted data is generated with a public key according to a public key encryption system or a secret key instead of a password related to encryption setting. In the third embodiment, as an aspect of the public key encryption system, two aspects including
(Aspect 3-1) generation of encrypted data with the public key of the reception user, and
(Aspect 3-2) generation of encrypted data with the secret key of the transmission user will be described.

The functional configuration of the multifunction peripheral according to the third embodiment can be the same as the functional configuration of the multifunction peripheral 10 according to the first embodiment. Thus, the same reference numerals are used, and the description thereof is omitted here.

### 3.1 Aspect 3-1

Aspect 3-1 is an aspect in which a public key (created by a reception user who is a transmission destination) for each transmission destination is registered instead of a password related to encryption setting, and encrypted data is generated using the public key. Then, the reception user of the encrypted data decrypts the encrypted data with the secret key created by the reception user.

### 3.1.1 Process Flow

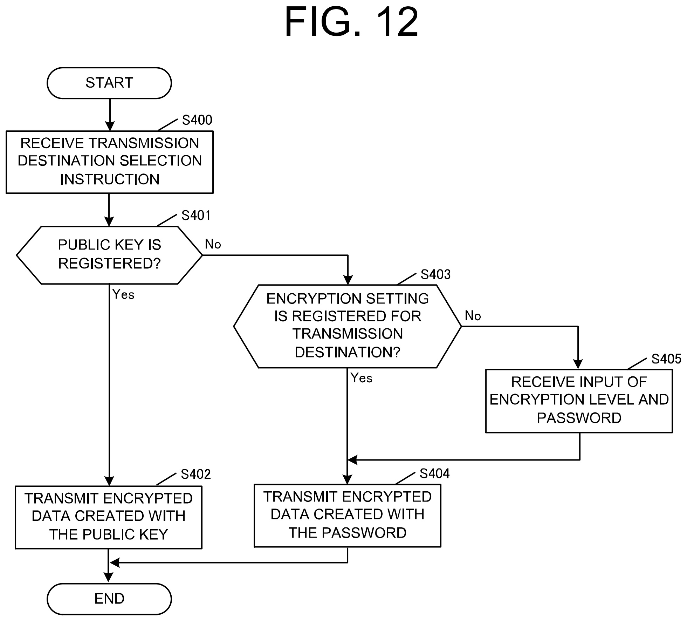

FIG. 12 is a flowchart illustrating a process flow according to the Aspect 3-1. The process to be explained in FIG. 12 is a process to be executed when the one or more controllers 11 of the multifunction peripheral 10 read the setting information management program 214, the encryption program 215, and the like.

The one or more controllers 11 receive an instruction to select a transmission destination to which encrypted data is transmitted by the transmission user from the address book (step S400).

Next, the one or more controllers 11 determine whether or not the public key associated with the transmission destination for which the selection instruction has been received is registered (step S401). When it is determined that the public key is registered, the one or more controllers 11 encrypt the target data with the registered public key, transmit the encrypted data to the transmission destination received in step S400, and end the process (step S401; Yes → step S402).

On the other hand, when it is determined that the public key is not registered, the one or more controllers 11 determine whether or not the encryption setting associated with the transmission destination for which the selection instruction is received is registered (step S401; No → step S403). When it is determined that the encryption setting is registered, the one or more controllers 11 encrypt the target data with the password related to the encryption setting, transmit the encrypted data, and end the process (step S403; Yes → step S404). When it is determined that the encryption setting is not registered, the one or more controllers 11 receive the input of the encryption level and the password as the encryption setting, encrypt the target data with the password related to the encryption setting, transmit the encrypted data to the transmission destination received in step S400, and end the process (step S403; No → step S405 → step S404).

### 3.1.2 Operation Example

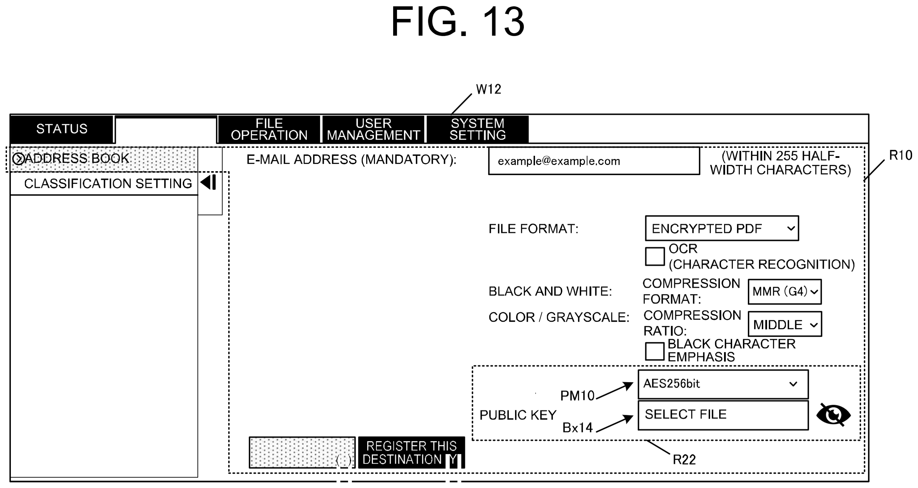

Next, an operation example according to the Aspect 3-1 will be described. FIG. 13 is a diagram illustrating an example of a display configuration of a management screen W12 displayed by the multifunction peripheral 10. Since the display configuration of the management screen W12 illustrated in FIG. 13 can be the same as that of the management screen W10 illustrated in FIG. 6 except for the encryption setting area R22, the description of the same configuration will be omitted.

The encryption setting area R22 includes a public key registration box Bx14 instead of the password input box Bx12 of the encryption setting area R16 of the management screen W10. The public key registration box Bx14 is an input box for receiving a registration instruction for a public key generated by a secret key of a reception user of encrypted data who is a transmission destination. The transmission user can register the public key as the encryption setting related to the transmission destination by selecting the file in which the public key is recorded.

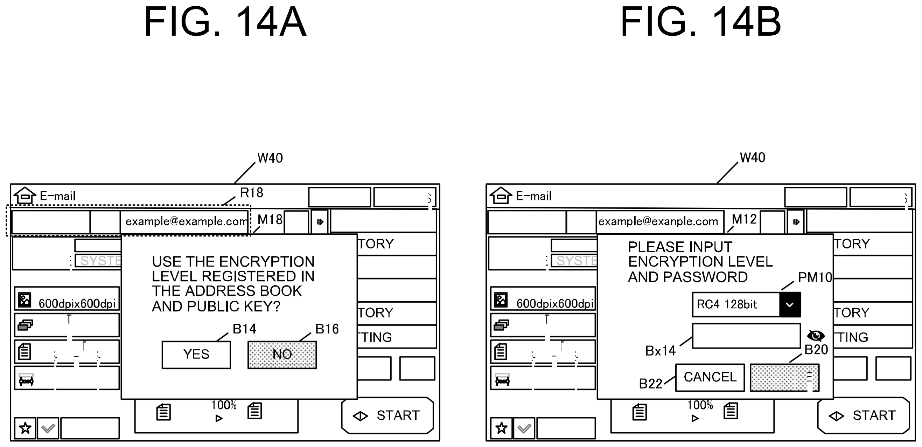

FIG. 14A and FIG. 14B are diagrams illustrating an example of a display configuration of a job execution screen W40 related to a Scan to E-mail job.

Here, FIG. 14A is an example of a display configuration of an inquiry screen M18 for inquiring whether or not to apply the registered public key to the transmission destination when the user selects the transmission destination of the encrypted data (example@example.com) from the address book via the transmission destination selection area R18 of the job execution screen W40.

The inquiry screen M18 includes a content "USE THE ENCRYPTION LEVEL REGISTERED IN THE ADDRESS BOOK AND PUBLIC KEY?" for inquiring whether or not to apply the registered public key to the transmission destination, a "YES" button B14 for receiving a selection instruction to agree with the inquiry content, and a "NO" button B16 for receiving a selection instruction not to agree with the inquiry content. The "YES" button B14 or the "NO" button B16 may have the same configuration as the configuration described in the inquiry screen M10 of FIG. 7, and thus the description thereof will be omitted here.

FIG. 14B is an example of a display configuration of the editing screen M12 displayed by the one or more controllers 11 when an instruction to select the "NO" button B16 of the inquiry screen M18 in FIG. 14A is received. The editing screen M12 illustrated in FIG. 14B may have the same configuration as that of the editing screen M12 illustrated in FIG. 7B, and thus the description thereof is omitted here.

### 3.2 Aspect 3-2

Aspect 3-2 is an aspect in which a secret key (created by a transmission user who is a transmission source) for each transmission destination is registered instead of a password related to encryption setting, and encrypted data is generated with the secret key. For example, in Aspect 3-2, the secret key of the transmission user is registered in association with the user authentication information for the multifunction peripheral 10, and the target data is encrypted with the secret key of the transmission user when the encrypted data is generated. With such a configuration, it is possible to prevent leakage of information associated with communication of a password.

3.2.1 Process Flow

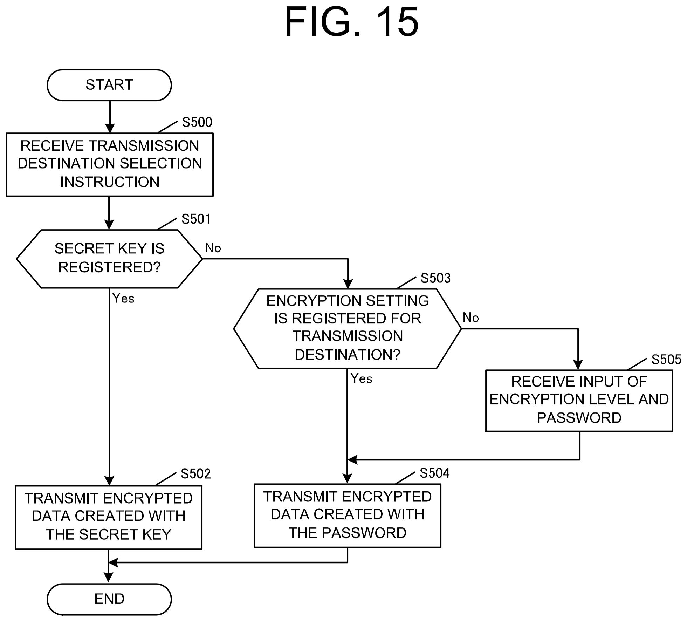

FIG. 15 is a flowchart illustrating a process flow according to the Aspect 3-2. The process to be explained in FIG. 15 is a process to be executed when the one or more controllers 11 of the multifunction peripheral 10 read the setting information management program 214, the encryption program 215, and the like.

The one or more controllers 11 receive an instruction to select a transmission destination to which encrypted data is transmitted by the user from the address book (step S500).

Next, the one or more controllers 11 determine whether or not the secret key associated with the authentication information of the transmission user is registered (step S501). When it is determined that the secret key is registered, the one or more controllers 11 encrypt the target data with the registered secret key, transmit the encrypted data to the transmission destination received in step S500, and end the process (step S501; Yes → step S502).

On the other hand, when it is determined that the secret key is not registered, the one or more controllers 11 determine whether or not the encryption setting associated with the transmission destination for which the selection instruction is received is registered (step S501; No → step S503). When it is determined that the encryption setting is registered, the one or more controllers 11 encrypt the target data with the password related to the encryption setting, transmit the encrypted data to the transmission destination received in step S500, and end the process (step S503; Yes → step S504). When it is determined that the encryption setting is not registered, the one or more controllers 11 receive the input of an encryption level and a password as the encryption setting, encrypt the target data with the password related to the encryption setting, transmit the encrypted data to the transmission destination received in step S500, and end the process (step S503; No → step S505 → step S504).

As described above, according to the third embodiment, by using the public key of the public key system, it is possible to avoid information leakage associated with communication of a password and to safely obtain a key used to generate encrypted data. Further, by using the public key, it is possible to avoid erroneous input of the password. Furthermore, since the secret key of the transmission user is used to generate the encrypted data, the reception user who is the transmission destination uses the public key of the transmission user to decrypt the encrypted data, and thus, it is possible to avoid information leakage associated with communication of a password and to safely obtain a key used to generate encrypted data. Furthermore, the same encrypted data generated with the secret key can be transmitted to a plurality of transmission destinations.

### 4. Fourth Embodiment

The fourth embodiment is a form of broadcast transmission in which encrypted data is transmitted to a plurality of transmission destinations. In the fourth embodiment, three aspects including
(Aspect 4-1) when encrypted data is transmitted to a plurality of transmission destinations, encryption setting associated with each transmission destination is applied,
(Aspect 4-2) when a plurality of transmission destinations are selected, encryption setting associated with any one of the transmission destinations is applied, and
(Aspect 4-3) when a transmission destination for which encryption setting is registered and a transmission destination for which encryption setting is not registered coexist, will be described as broadcast transmission.

The functional configuration of the multifunction peripheral according to the fourth embodiment can be the same as the functional configuration of the multifunction peripheral 10 according to the first embodiment. Thus, the same reference numerals are used, and the description thereof is omitted here.

### 4.1 Aspect 4-1

Aspect 4-1 is an aspect in which, when encrypted data is transmitted to a plurality of transmission destinations, encrypted data encrypted with different encryption algorithms can be transmitted to the individual transmission destinations by applying encryption setting associated with the respective transmission destinations or newly performing encryption setting.

### 4.1.1 Process Flow

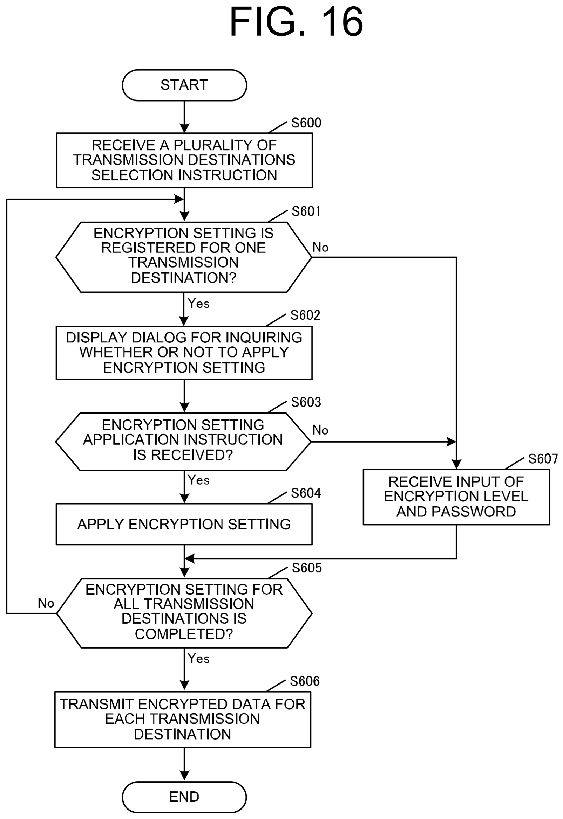

FIG. 16 is a flowchart illustrating a process flow according to the Aspect 4-1. The process to be explained in FIG. 16 is a process to be executed when the one or more controllers 11 of the multifunction peripheral 10 read the setting information management program 214, the encryption program 215, and the like.

The one or more controllers 11 receive an instruction to select a plurality of transmission destinations to which encrypted data is transmitted by the transmission user from the address book (step S600).

Next, the one or more controllers 11 determine whether or not encryption setting is registered for one of the selected plurality of transmission destinations (step S601). When it is determined that the encryption setting is registered, the one or more controllers 11 display an inquiry screen for inquiring whether or not to apply the registered encryption setting (step S601; Yes → step S602).

Then, the one or more controllers 11 determine whether or not an instruction to apply the encryption setting has been received from the transmission user via the displayed inquiry screen (step S603). When it is determined that the instruction to apply the encryption setting is received from the transmission user, the one or more controllers 11 apply the encryption setting registered for the transmission destination received in step S600 to the target data (step S603; Yes → step S604).

Next, the one or more controllers 11 determine whether or not the encryption setting has been completed for all of the transmission destinations selected in step S600 (step S605). When it is determined that the encryption setting for all of the transmission destinations has not been completed, the one or more controllers 11 return the process to step S601 (step S605; No → step S601).

On the other hand, when it is determined that the encryption setting for all of the transmission destinations has been completed, the one or more controllers 11 transmit the encrypted data to each of the transmission destinations received in step S600, and end the process (step S605; Yes → step S606).

When it is determined that the encryption setting is not registered for the transmission destination received in step S600 (step S601; No), and when it is determined that the instruction to apply the encryption setting by the transmission user is not received (step S603; No), the one or more controllers 11 receive the input of an encryption level and a password as the encryption setting (step S607), and the process proceeds to step S605.

### 4.1.2 Operation Example

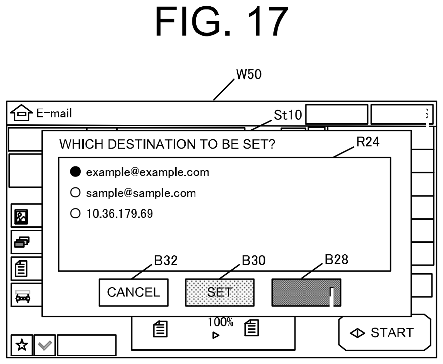

FIG. 17 is a diagram illustrating an example of a display configuration of a job execution screen W50 related to a Scan to E-mail job.

FIG. 17 is an example in which, when encrypted data is generated, a selection screen St10 for receiving an instruction to select a transmission destination to which encryption setting is applied is displayed on the job execution screen W50. The selection screen St10 includes a selection area R24 for accepting selection of a transmission destination, a "TRANSMIT" button B28, a "SET" button B30, and a "CANCEL" button B32.

In the selection area R24, transmission destinations to which the encryption setting can be applied are displayed. Each transmission destination is provided with a radio button for receiving a selection instruction from the transmission user, and the transmission user can input an instruction to select the transmission destination to which the encryption setting is applied by selecting the radio button corresponding to the transmission destination for which the encryption setting is desired.

The "TRANSMIT" button B28 is a button for receiving an instruction to transmit encrypted data from the transmission user after the encryption setting for all of the transmission destinations is completed. When an instruction to select the "TRANSMIT" button B28 is received, the one or more controllers 11 encrypt the target data based on the encryption setting corresponding to each transmission destination, and transmit the encrypted data encrypted to each transmission destination. The "TRANSMIT" button B28 may be controlled to be in an inactive state (for example, darkened) so as not to be selected by the transmission user until the encryption setting for all of the transmission destinations is completed, and to be in an active state so as to be selected by the transmission user after the encryption setting for all of the transmission destinations is completed.

The "SET" button B30 is a button for receiving input of an instruction to apply encryption setting to the transmission destination selected in the selection area R24. When an instruction to select the "SET" button B30 is received, the one or more controllers 11 display, for example, the inquiry screen M10 illustrated in FIG. 7A, and receive input of the instruction to apply the encryption setting. When an instruction to select the "YES" button B14 on the inquiry screen M10 is received, the one or more controllers 11 returns the display screen to the selection screen St10. When the encryption setting for all of the transmission destinations has been completed, the one or more controllers 11 do not need to return the display screen to the selection screen St10, and for example, when the one or more controllers 11 perform the control of making the "TRANSMIT" button B28 inactive, the one or more controllers 11 may perform the control of making the "TRANSMIT" button B28 active. On the other hand, when an instruction to select the "NO" button B16 on the inquiry screen M10 is received, the one or more controllers 11 display an editing screen M12 illustrated in FIG. 7B, and receive input of an encryption level and a password as encryption setting by the transmission user.

The "CANCEL" button B32 receives an instruction to cancel the selected content of the transmission destination to which the encryption setting is applied. When an instruction to select the "CANCEL" button B32 is received, the one or more controllers 11 cancel the selected content of the transmission destination to which the encryption setting is applied, and end the display of the selection screen St10.

### 4.2 Aspect 4-2

Aspect 4-2 is an aspect in which, when a plurality of transmission destinations are selected, the same encrypted data encrypted by the same encryption algorithm can be transmitted to all of the transmission destinations by applying the encryption setting associated with any one of the transmission destinations or newly performing the encryption setting.

### 4.2.1 Process Flow

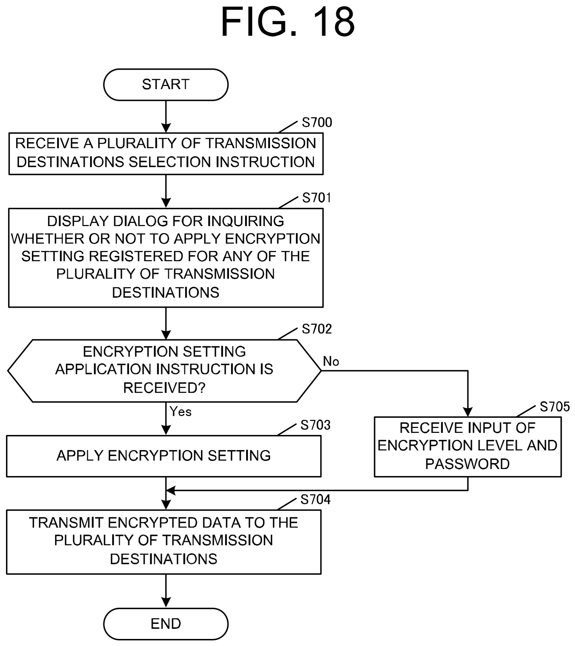

FIG. 18 is a flowchart illustrating a process flow according to the Aspect 4-2. The process to be explained in FIG. 18 is a process to be executed when the one or more controllers 11 of the multifunction peripheral 10 read the setting information management program 214, the encryption program 215, and the like.

The one or more controllers 11 receive an instruction to select a plurality of transmission destinations to which encrypted data is transmitted by the transmission user from the address book (step S700).

Next, the one or more controllers 11 display an inquiry screen for inquiring whether or not to apply the encryption setting registered in any of the plurality of transmission destinations (step S701).

Then, the one or more controllers 11 determine whether or not an instruction to apply the encryption setting has been received from the transmission user via the displayed inquiry screen (step S702). When it is determined that the instruction to apply the encryption setting is received from the transmission user, the one or more controllers 11 apply the encryption setting for which the application instruction is received to the target data (step S702; Yes → step S703).

The one or more controllers 11 transmit the same encrypted data encrypted with the same encryption algorithm to the plurality of transmission destinations selected in step S700, and end the process (step S704).

When it is determined that the instruction to apply the encryption setting by the transmission user is not received (step S702; No), the one or more controllers 11 receive the input of an encryption level and a password as the encryption setting (step S705), transmit the encrypted data encrypted with the encryption setting to the plurality of transmission destinations selected in step S700, and end the process (step S704).

### 4.2.2 Operation Example

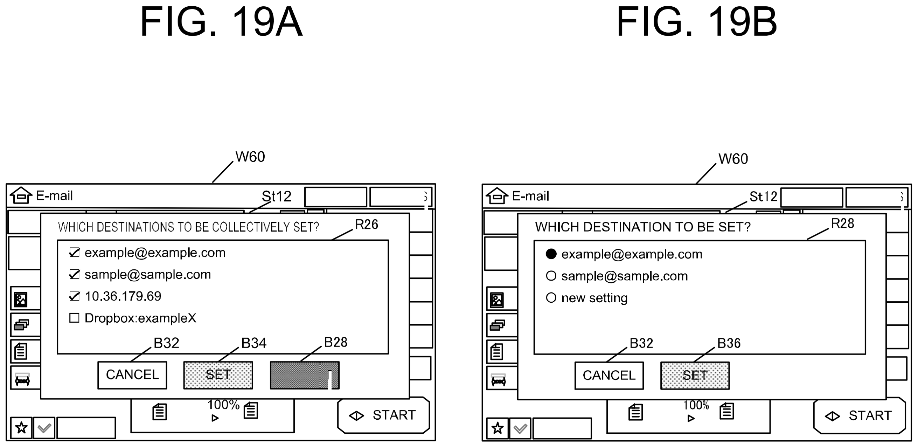

FIG. 19A and FIG. 19B are diagrams illustrating an example of a display configuration of a job execution screen W60 related to a Scan to E-mail job.

FIG. 19A is an example in which a selection screen St12 for receiving an instruction to select transmission destinations to which the same encrypted data is bulk transmitted is displayed on the job execution screen W60. The selection screen St12 includes a selection area R26 for receiving selection of a transmission destination, a "TRANSMIT" button B28, a "SET" button B34, and a "CANCEL" button B32.

In the selection area R26, transmission destinations to which the same encrypted data can be bulk transmitted are displayed. Each transmission destination is provided with a check box for receiving a selection instruction by the transmission user, and the transmission user can input a selection instruction for transmission destinations to which the encrypted data is bulk transmitted by checking the check box corresponding to the transmission destination for which the simultaneous transmission of the encrypted data is desired.

The "SET" button B34 is a button for receiving an instruction to select a transmission destination for which encryption setting to be applied to generation of encrypted data is registered, from among the transmission destinations selected in the selection area R26. When the instruction to select the "SET" button B34 is received, the one or more controllers 11 display a selection area R28 illustrated in FIG. 19B on the selection screen St12.

Each transmission destination displayed in the selection area R28 in FIG. 7B is provided with a radio button for receiving a selection instruction from the transmission user, and the transmission user can input a selection instruction for the transmission destination to which the encryption setting is applied by selecting the radio button corresponding to the transmission destination for which the encryption setting that is desired to be applied is registered. A "SET" button B36 displayed on the selection screen St12 is a button for receiving an instruction to confirm the selection of the transmission destination. When the selected transmission destination is a transmission destination for which the encryption setting is registered (for example, example@example.com), the one or more controllers 11 display a confirmation screen M20 illustrated in the next figure. On the other hand, when the new setting is selected, the one or more controllers 11 display an editing screen M12 illustrated in FIG. 7B, and receives input of an encryption level and a password as encryption setting by the transmission user.

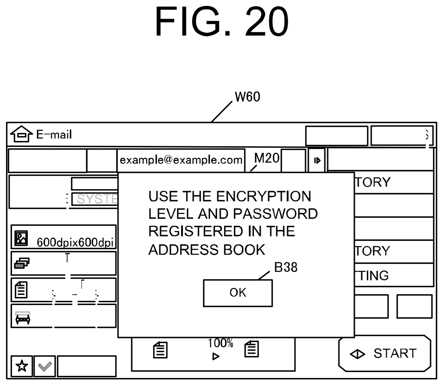

FIG. 20 is a diagram illustrating an example of a display configuration of the confirmation screen M20 displayed by the one or more controllers 11 when the selected transmission destination is a transmission destination for which encryption setting is registered. The confirmation screen M20 includes a content "USE THE ENCRYPTION LEVEL AND PASSWORD REGISTERED IN THE ADDRESS BOOK" indicating that the encryption setting related to the selected transmission destination is applied, and an "OK" button B38. In addition to the above-described configuration, the confirmation screen M20 may be provided with, for example, a cancel button and a selection button for receiving an instruction to confirm the encryption setting registered in the address book.

The "OK" button B38 is a button for receiving an agreement instruction when it is agreed to apply the encryption setting related to the selected transmission destination. When an instruction to select the "OK" button B38 is received, the one or more controllers 11 determine the application of the encryption setting related to the selected transmission destination, and return the display screen to the selection screen St12.

### 4.3 Aspect 4-3

Aspect 4-3 is an aspect in which, when a transmission destination for which encryption setting is registered and a transmission destination for which encryption setting is not registered coexist, the encryption setting is applied to the transmission destination for which encryption setting is registered, and encryption setting is newly received for the transmission destination for which encryption setting is not registered.

### 4.3.1 Process Flow

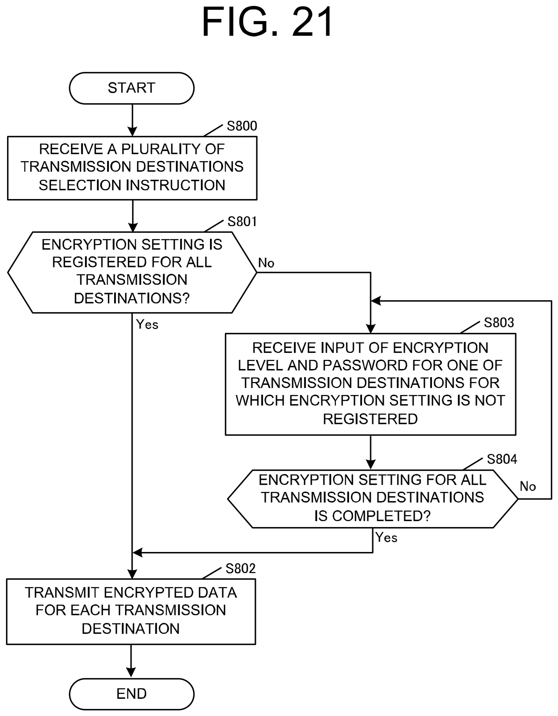

FIG. 21 is a flowchart illustrating a process flow according to the Aspect 4-3. The process to be explained in FIG. 21 is a process to be executed when the one or more controllers 11 of the multifunction peripheral 10 read the setting information management program 214, the encryption program 215, and the like.

The one or more controllers 11 receive an instruction to select a plurality of transmission destinations to which encrypted data is transmitted by the transmission user from the address book (step S800).

Next, the one or more controllers 11 determine whether or not the encryption setting is registered for all of the selected transmission destinations (step S801). When it is determined that the encryption setting is registered for all of the transmission destinations, the one or more controllers 11 transmit the encrypted data for each transmission destination and end the process (step S801; Yes → step S802).

On the other hand, when it is determined that the encryption setting is not registered for all of the transmission destinations, the one or more controllers 11 receive an input of an encryption level and a password of one of the transmission destinations for which the encryption setting is not registered (step S801; No → step S803).

Then, the one or more controllers 11 determine whether or not the encryption setting has been completed for all of the transmission destinations selected in step S800 (step S804). When it is determined that the encryption setting for all of the transmission destinations has not been completed, the one or more controllers 11 return the process to step S803 (step S804; No → step S803).

On the other hand, when it is determined that the encryption setting for all of the transmission destinations has been completed, the one or more controllers 11 transmit the encrypted data to each of the transmission destinations, and end the process (step S804; Yes → step S802).

### 4.3.2 Operation Example

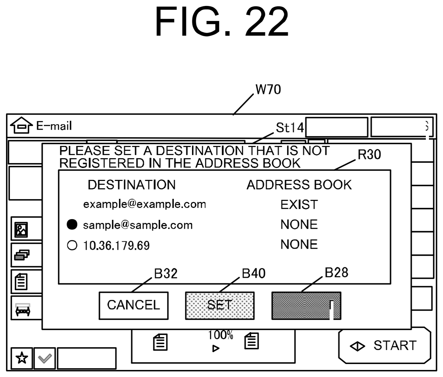

FIG. 22 is a diagram illustrating an example of a display configuration of a job execution screen W70 related to a Scan to E-mail job.

FIG. 22 is an example in which, when encrypted data to which encryption setting is not registered is generated, a selection screen St14 for receiving an instruction to select a transmission destination to which the encryption setting is newly applied is displayed on the job execution screen W70. The selection screen St14 includes a selection area R30 for accepting selection of a transmission destination, a "TRANSMIT" button B28, a "SET" button B40, and a "CANCEL" button B32.

In the selection area R30, a transmission destination for which encryption setting is registered and a transmission destination for which encryption setting is not registered coexist and are displayed so as to be distinguishable. A radio button for receiving a selection instruction by the transmission user and a registration status ("EXIST" or "NONE") of the encryption setting in the address book (information) are displayed for a transmission destination to which the encryption setting has not been applied and to which the encryption setting can be newly applied. The transmission user can select the transmission destination to which the encryption setting is applied by selecting the radio button corresponding to the transmission destination for which the encryption setting is desired after confirming the registration status of the encryption setting.

The "SET" button B40 is a button for receiving input of an encryption level and a password as encryption setting for the transmission destination selected in the selection area R30. When an instruction to select the "SET" button B40 is received, the one or more controllers 11 display, for example, the editing screen M12 illustrated in FIG. 7B, and receive an input of the encryption setting by the user.

As described above, according to the fourth embodiment, it is possible to save time and effort for setting the encryption level, the password, and the like at the time of transmitting the encrypted data in broadcast transmission. Further, in the fourth embodiment, it is possible to flexibly cope with a case where encryption setting different from the encryption setting registered in the address book is desired to be applied. Furthermore, according to the fourth embodiment, it is possible to save time and effort for setting the encryption level, the password, and the like at the time of transmitting the same encrypted data to a plurality of transmission destinations. In addition, since the encryption setting selected/input by the transmission user is automatically applied to the transmission destination for which the encryption setting is not registered, it is possible to save time and effort of the transmission user.

### 5 Fifth Embodiment

The fifth embodiment is a form in which a transmission destination, encryption setting registered for the transmission destination, and the like are displayed before and after transmission of encrypted data.

The functional configuration of the multifunction peripheral according to the fifth embodiment can be the same as the functional configuration of the multifunction peripheral 10 according to the first embodiment. Thus, the same reference numerals are used, and the description thereof is omitted here.

### 5.1 Process Flow

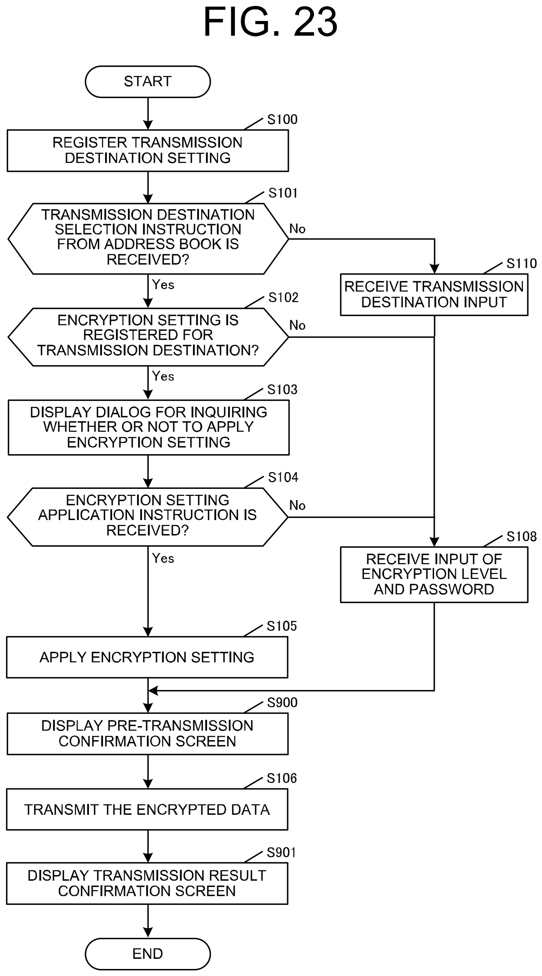

FIG. 23 is a flowchart illustrating a process flow according to the fifth embodiment. The process to be explained in FIG. 23 is a process to be executed when the one or more controllers 11 of the multifunction peripheral 10 read the setting information management program 214, the encryption program 215, and the like.

The process described with reference to FIG. 23 is obtained by adding a process of displaying the pre-transmission confirmation screen related to step S900 after step S105 described with reference to the flowchart of FIG. 5 and a process of displaying the transmission result confirmation screen related to step S901 after step S106. Therefore, description of the same process as that in the flowchart of FIG. 5 will be omitted.

After the encryption setting is applied (step S105) or after the input of the encryption level and the password for the transmission destination is received (step S108), the one or more controllers 11 display a pre-transmission confirmation screen in which the encrypted data transmission destination, the encryption setting registered for the transmission destination, and the like are displayed (step S900).

The one or more controllers 11 transmit the encrypted data generated by applying the encryption setting to the transmission destination received in step S101 (step S106), display a transmission result confirmation screen in which the transmission result of the encrypted data to the transmission destination is displayed, and end the process (step S901).

### 5.2 Operation Example

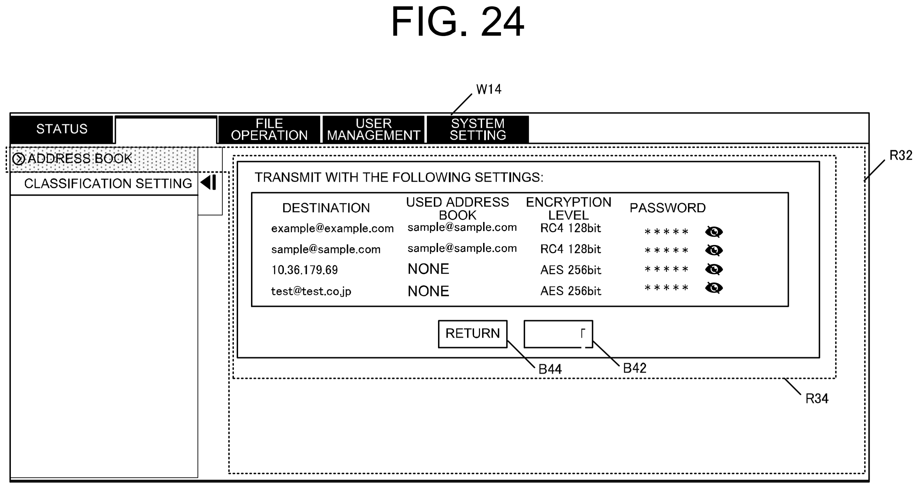

Next, an operation example according to the fifth embodiment will be described. FIG. 24 is a diagram illustrating an example of a display configuration of a management screen W14 displayed by the multifunction peripheral 10. Since the display configuration of the management screen W14 illustrated in FIG. 24 can be the same as that of the management screen W10 illustrated in FIG. 6 except for the address book management area R32, the description of the same configuration will be omitted.

The address book management area R32 includes a pre-transmission confirmation area R34. The pre-transmission confirmation area R34 is an area for displaying information related to generation and transmission of encrypted data, such as a transmission destination, a used address book, an encryption level, and a password, before transmission of the encrypted data. Further, the address book management area R32 includes a "TRANSMIT" button B42 and a "RETURN" button B44.

The "TRANSMIT" button B42 is a button for receiving an instruction to transmit encrypted data from the user. When an instruction to select the "TRANSMIT" button B42 by the user is received, the one or more controllers 11 transmit the encrypted data to the transmission destination displayed in the pre-transmission confirmation area R34. The "RETURN" button B44 is a button for receiving an instruction to change the management screen W14 to a screen displayed immediately before the management screen W14 is displayed. For example, when an instruction to select the "RETURN" button B44 is received, the one or more controllers 11 change the display screen to a screen (for example, the job execution screen W20) displayed immediately before the management screen W14 is displayed.

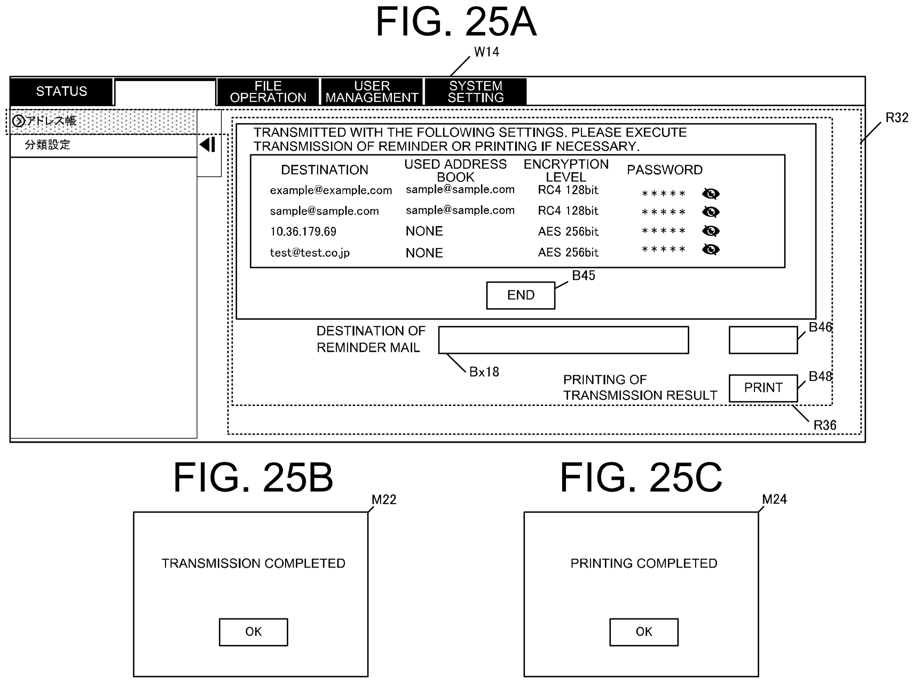

FIG. 25A is a diagram illustrating an example of a display configuration of a transmission result confirmation area R36 displayed in an address book management area R32 after the encrypted data is transmitted.

The transmission result confirmation area R36 displays information related to generation and transmission of encrypted data, such as a transmission destination, a used address book, an encryption level, and a password, as a transmission result after the encrypted data is transmitted. The transmission result confirmation area R36 can include a reminder mail transmission destination input box Bx18, a "TRANSMIT" button B46, and a "PRINT" button B48 in addition to an end button B45.

The end button B45 is a button for receiving an instruction to end the process related to the transmission result confirmation. The reminder mail transmission destination input box Bx18 is an input box for receiving an input of a transmission destination of a reminder mail. The "TRANSMIT" button B46 is a button for receiving an instruction to transmit a reminder mail. The "PRINT" button B48 is a button for receiving an instruction to print the transmission result of the encrypted mail.

Further, FIG. 25B illustrates an example of a display configuration of a transmission result screen M22 that displays a transmission result of a reminder mail transmitted when an instruction to select a "TRANSMIT" button B46 is received, and FIG. 25C illustrates an example of a display configuration of a printing result screen M24 that displays a printing result printed when an instruction to select a "PRINT" button B48 is received.

As described above, according to the fifth embodiment, it is possible to confirm which encryption setting is applied to each transmission destination before and after the transmission of the encrypted data.

### 6 Sixth Embodiment

The sixth embodiment is a form in which the password generator as the generator is used when encryption setting for the transmission destination is not registered or when encryption setting cannot be applied.

The functional configuration of the multifunction peripheral according to the sixth embodiment can be the same as the functional configuration of the multifunction peripheral 10 according to the first embodiment. Thus, the same reference numerals are used, and the description thereof is omitted here.

### 6.1 Process Flow

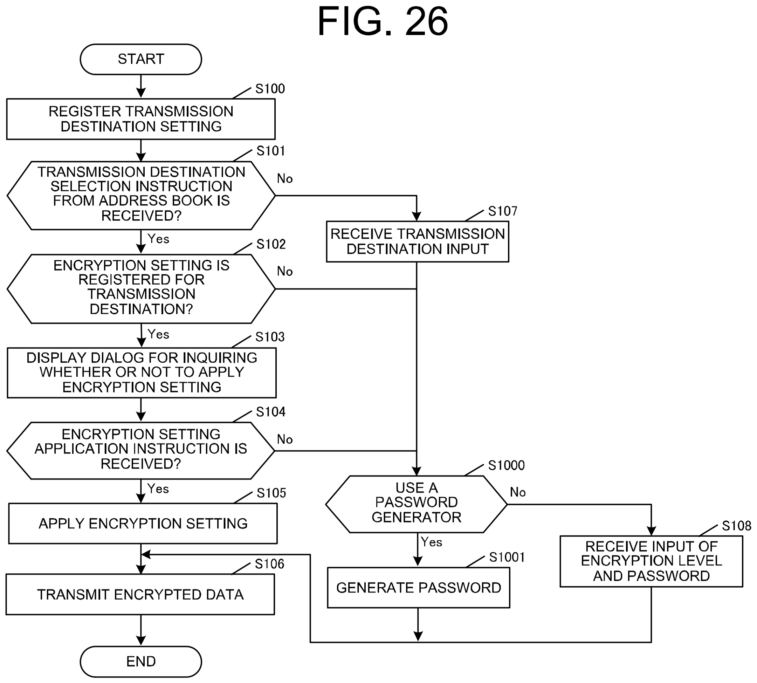

FIG. 26 is a flowchart illustrating a process flow according to the sixth embodiment. The process to be explained in FIG. 26 is a process to be executed when the one or more controllers 11 of the multifunction peripheral 10 read the setting information management program 214, the encryption program 215, and the like.

The process described with reference to FIG. 26 is obtained by adding a process related to the use of the password generator between step S107 and step S106 described with reference to the flowchart of FIG. 5. Therefore, description of the same process as that in the flowchart of FIG. 5 will be omitted.

In step S101, when it is determined that the selection instruction for the transmission destination has not been received, the one or more controllers 11 receive the input of the transmission destination, and the process proceeds to step S1000 (step S101; No → step S107 → step S1000).

Further, when it is determined in step S102 that the encryption setting is not registered for the transmission destination selected by the transmission user (step S102; No), and when it is determined in step S104 that the instruction to apply the encryption setting has not been received from the transmission user (step S104; No), the one or more controllers 11 determine whether or not to use the password generator (step S1000). In this case, the one or more controllers 11 display an inquiry screen for inquiring whether or not to use the password generator and determine whether or not to use the password generator. This inquiry screen will be described in the next figure.

When it is determined that the password generator is used, the one or more controllers 11 use the password generator to generate a password related to the encryption setting, and the process proceeds to step S106 (step S1000; Yes → step S1001 → step S106).

On the other hand, when it is determined that the password generator is not used, the one or more controllers 11 receive input of an encryption level and a password for the transmission destination, and the process proceeds to step S106 (step S1000; No → step S108 → step S106).

### 6.2 Operation Example

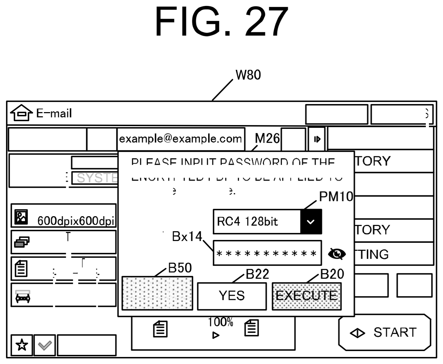

FIG. 27 shows an example of a display configuration in which an inquiry screen M26 for inquiring of the user whether or not the password generator is used is displayed on the job execution screen W80. The inquiry screen M26 may have the same configuration as the editing screen M12 illustrated in FIG. 7B, but is different from the editing screen M12 in that the inquiry screen M26 includes a "GENERATE PASSWORD" button B50 for receiving an instruction to select password generation (whether or not to use a password generator).

When the one or more controllers 11 receive an instruction to select the "GENERATE PASSWORD" button B50, the one or more controllers 11 generate a password by the password generator.

As described above, according to the sixth embodiment, when the password is input in the encryption setting, it is possible to prevent the use of the password that is easy to expect, and it is possible to save effort of examining the content of the password.

The present disclosure is not limited to the embodiments described above, and various modifications may be made thereto. That is, the technical scope of the present disclosure also includes embodiments that may be obtained by combining technical measures modified as appropriate without departing from the gist of the present disclosure.

Although some parts of the above-described embodiments are separately described for convenience of explanation, it is needless to say that the embodiments may be combined and implemented within a technically allowable range.

In addition, the program that operates in each device in the embodiments is a program that controls a CPU or the like (a program that causes a computer to function) in a manner to realize the functions of the above embodiments. The information handled by these devices is temporarily stored in a temporary storage device (for example, a RAM) at the time of the process, and then stored in various storage devices such as a ROM and an HDD to be read, corrected, and written by the CPU as needed.

Here, a computer-readable non-transitory recording medium on which a program in an information processing apparatus is recorded may be any of a semiconductor medium (for example, a ROM and a non-volatile memory card), an optical recording medium/magnetooptical recording medium (for example, a digital versatile disc (DVD), a magneto optical disc (MO), a mini disc (MD), a compact disc (CD), and a Blu-ray (registered trademark) disc (BD)), a magnetic recording medium (for example, a magnetic tape and a flexible disk), and the like. In this case, the program recorded in the recording medium is read by a computer of the information processing apparatus and executed by the computer, so that not only the functions of the above-described embodiments are realized, but also the functions of the present disclosure are realized by processing in cooperation with an operating system, another application program, or the like on the basis of an instruction of the program.

When the program is distributed in the market, the program can be stored in a portable recording medium and distributed, or can be transferred to a server computer connected via a network such as the Internet. In this case, of course, the storage device of the server computer is also included in the present disclosure.

Further, each functional block or various features of the device used in the above-described embodiments can be implemented or executed by an electric circuit, such as an integrated circuit or a plurality of integrated circuits. The electrical circuit that is designed to implement the functions described in the present specification may include a general-purpose processor, a digital signal processor (DSP), an application-specific integrated circuit (ASIC), a field programmable gate array (FPGA) or other programmable logic devices, a discrete gate or transistor logic, a discrete hardware component, or any combination thereof. The general-purpose processor may be a microprocessor or may be a conventional processor, one or more controllers, a microcontroller, or a state machine. The electrical circuit described above may be configured by a digital circuit or an analog circuit. Furthermore, when an integrated circuit technology that replaces the current integrated circuits appears due to the progress of the semiconductor technology, one or more aspects of the present disclosure can use a new integrated circuit according to the technology.

### REFERENCE SIGNS LIST

10 multifunction peripheral
11 one or more controllers
13 display
15 operation inputter
17 communicator
19 image processor
191 image former
193 image inputter
21 storage
211 control program
212 display control program
213 job control program
214 setting information management program
215 encryption program
216 setting information storage area
2161 encryption setting storage area
2162 user information storage area

## Claims

1. A data transmission device (10), comprising:
a transmitter (11) that transmits data;
a storage (21) that stores a transmission destination of the data; and
one or more controllers (11) that control encryption of the data, wherein
the storage (21)
stores encryption setting for encrypting the data in association with the transmission destination, and
the one or more controllers (11)
receive an editing instruction for the encryption setting according to whether or not the encryption setting is applicable to the data, and transmit encrypted data to the transmission destination via the transmitter.

2. The data transmission device (10) according to claim 1, wherein
the one or more controllers (11)
receive selection of the transmission destination, and
display, when the data is transmitted to the selected transmission destination, an inquiry screen that inquires of a user whether or not the encryption setting is applicable.

3. The data transmission device (10) according to claim 1, wherein
the one or more controllers (11)
display, when it is determined that the encryption setting is not applicable, an editing screen that receives the editing instruction.

4. The data transmission device (10) according to claim 1, wherein
the one or more controllers (11)
determine, when the encryption setting does not match an encryption condition for the data, that the encryption setting is not applicable.

5. The data transmission device (10) according to claim 4, wherein
a situation in which the encryption setting does not match an encryption condition for the data includes
a change of encryption level setting in the encryption setting.

6. The data transmission device (10) according to claim 1, wherein
the one or more controllers (11)
encrypt the data according to encryption setting that is based on a public key encryption system.

7. The data transmission device (10) according to claim 1, wherein
the one or more controllers (11)
receive, when the encrypted data is bulk transmitted to a plurality of the transmission destinations, a selection instruction of the transmission destination associated with the encryption setting to be applied.

8. The data transmission device (10) according to claim 1, further comprising
a display (13), wherein
the one or more controllers (11)
display, before the transmission of the encrypted data, a confirmation screen that confirms the encryption setting and the transmission destination associated with the encryption setting on the display.

9. The data transmission device (10) according to claim 1, further comprising
a generator (11) that generates encryption information, wherein
the one or more controllers (11)
encrypt the data based on the encryption information generated by the generator (11).

10. A data transmission method in which
a data transmission destination is stored and
encryption of the data is controlled, the method comprising:
storing encryption setting for encrypting the data in association with the transmission destination, and
receiving an editing instruction for the encryption setting according to whether or not the encryption setting is applicable to the data, and transmitting encrypted data to the transmission destination.
